(19) Europäisches Patentamt European Patent Office Office européen des brevets

(11) **EP 4 510 520 A1**

(12) **EUROPEAN PATENT APPLICATION**

(43) Date of publication:
**19.02.2025   Bulletin 2025/08**

(21) Application number: **24195171.4**

(22) Date of filing: **19.08.2024**

(51) International Patent Classification (IPC):
**H04L 41/0894** (2022.01)   **H04L 41/0896** (2022.01)
**H04L 41/0897** (2022.01)   **H04L 41/142** (2022.01)
**H04L 41/5019** (2022.01)   **H04L 43/0888** (2022.01)
**H04W 24/02** (2009.01)     H04L 41/5054 (2022.01)

(52) Cooperative Patent Classification (CPC):
**H04L 41/0894; H04L 41/0896; H04L 41/0897;
H04L 41/142; H04L 41/5019; H04L 43/0888;
H04W 24/02;** H04L 41/5054

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.08.2023   IN 202321055299
16.08.2024   US 202418807067**

(71) Applicant: **Mavenir Systems, Inc.
Richardson, TX 75081 (US)**

(72) Inventor: **TANEJA, Mukesh
Bangalore 560037 (IN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **POLICY-BASED PERFORMANCE MANAGEMENT FOR 5G NETWORK SLICES IN O-RAN NETWORKS**

(57)     A method for optimizing service-level-policy-based network performance management in a 5G wireless network slice includes: analyzing, by a slice analytics module, a target slice throughput of the slice in comparison to an observed slice throughput of the slice to compute a slice-throughput error function; and updating, by the slice analytics module, based on at least the slice-throughput error function, at least one of the following: i) radio resource management policy maximum ratio for the slice and a corresponding shared pool of resource blocks (RBs) for the slice; ii) radio resource management policy minimum ratio for the slice and a corresponding prioritized pool of RBs for the slice; and iii) radio resource management policy dedicated ratio for the slice and a corresponding dedicated pool of RBs for the slice.

FIG. 1

**Description**

BACKGROUND OF THE INVENTION

1. Field of the Invention

The present disclosure is related to 5G wireless networks, and relates more particularly to optimizing service-level-policy-based performance management for 5G network slices in O-RAN networks.

2. Description of Related Art

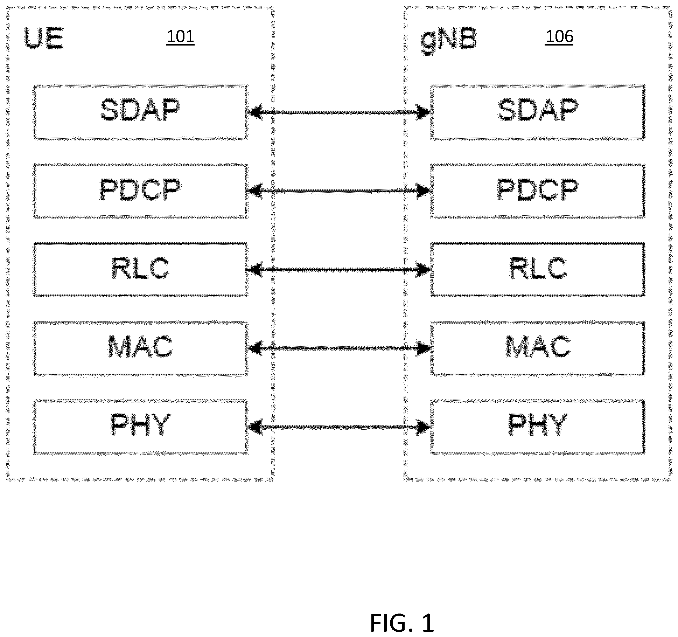

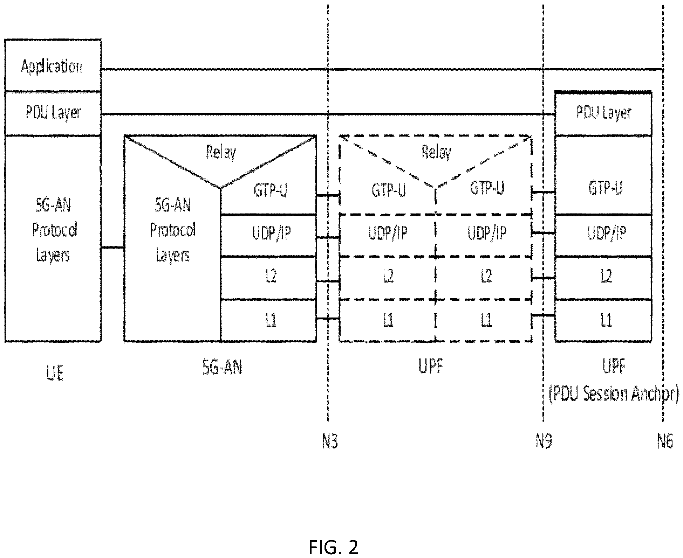

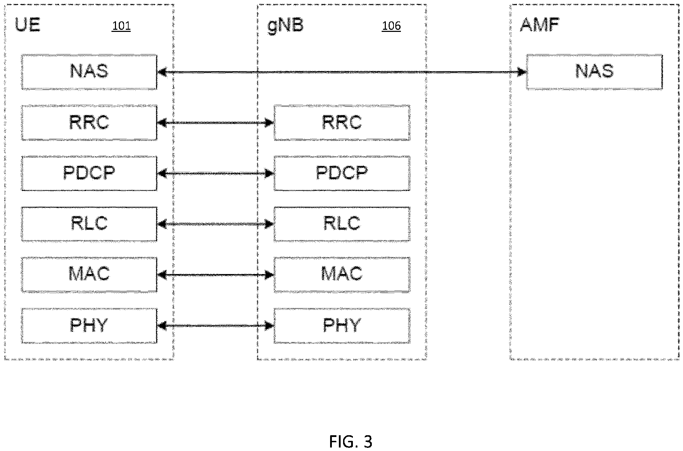

In the following sections, overview of Next Generation Radio Access Network (NG-RAN) architecture and 5G New Radio (NR) stacks will be discussed. 5G NR (New Radio) user and control plane functions with monolithic gNB 106 (gNodeB) are shown in FIGS. 1-3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. In addition, as shown in FIG. 2 (which is accordance with 3GPP TS 23.501), which is a block diagram illustrating the user plane protocol stacks for a PDU session of 5G NR, the Protocol Data Unit (PDU) layer corresponds to the PDU carried between the user equipment (UE) 101 and the data network (DN) over the PDU session. The PDU session can correspond to Internet Protocol version 4 (IPv4), IPv6, or both types of IP packets (IPv4v6). General Packet Radio Services (GPRS) Tunneling Protocol - User Plane (GTP-U) supports tunnelling user plane data over N3 and N9 in FIG. 2. It provides encapsulation of end user PDUs for N3 and N9 interfaces. For the control plane (shown in FIG. 3, which is in accordance with 3GPP TS 38.300), RRC (Radio Resource Control), PDCP, RLC, MAC and PHY sublayers are terminated in the gNB 106 on the network side and NAS (Non-Access Stratum) is terminated in the AMF (Access Mobility Function) on the network side.

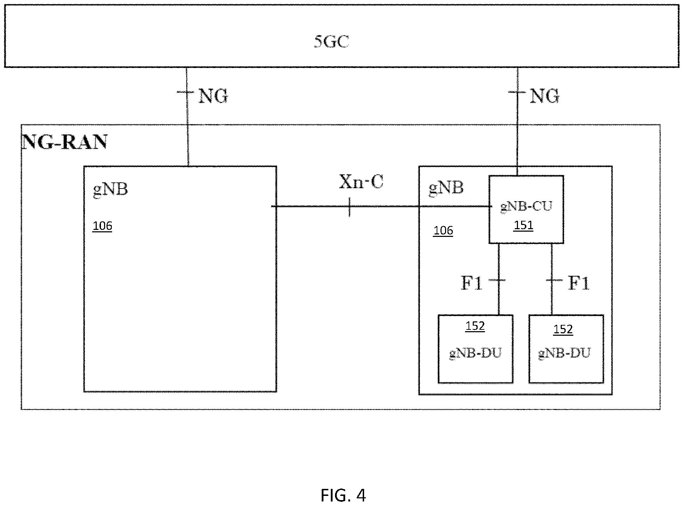

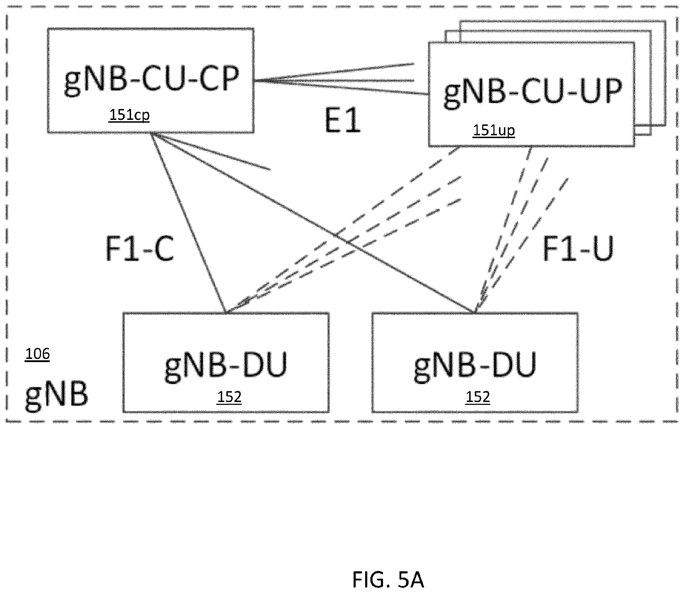

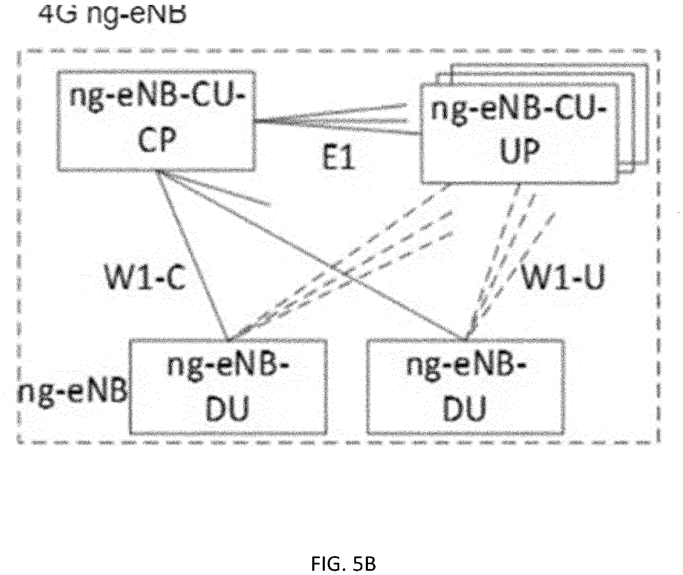

NG-Radio Access Network (NG-RAN) architecture from 3GPP TS 38.401 is shown in FIGS. 4-5. As shown in FIG. 4, the NG-RAN consists of a set of gNBs 106 connected to the 5GC through the NG interface. As shown in FIG. 4, F1 is the interface between gNB-CU 151 (gNB 106 - Centralized Unit) and gNB-DU 152 (gNB 106 - Distributed Unit), NG is the interface between gNB-CU 151 (or gNB) and 5GC (5G Core), and Xn is interface between gNBs 106 (in FIG. 4, Xn-C connects the first gNB 106 to the gNB-CU 151 of the second gNB). As shown in FIG. 5A (which illustrates separation of CU-CP 151cp (CU-Control Plane) and CU-CP 151up (CU-User Plane)), E1 is the interface between gNB-CU-CP 151cp (CU-Control Plane) and gNB-CU-CP 151up (CU-User Plane), F1-C is the interface between gNB-CU-CP 151cp and gNB-DU, and F1-U is the interface between gNB-CU-CP 151up and gNB-DU 152. A gNB 106 may consist of a gNB-CU-CP 151cp, multiple gNB-CU-CP 151ups and multiple gNB-DUs 152. One gNB-DU 152 is connected to only one gNB-CU-CP 151cp and one gNB-CU-CP 151up is connected to only one gNB-CU 151. FIG. 4B shows an example of a Separation of 4G CU-CP (CU-Control Plane) and CU-UP (CU-User Plane). The example shown in FIG. 4B shows ng-eNB but legacy eNB also applies same architecture.

In this section, an overview Layer 2 (L2) of 5G NR will be provided. L2 of 5G NR is split into the following sublayers (in accordance with 3GPP TS 38.300):

   1) Medium Access Control (MAC): The MAC sublayer offers Logical Channels (LCs) to the RLC sublayer. This layer runs a MAC scheduler to schedule radio resources across different LCs (and their associated radio bearers).

   2) Radio Link Control (RLC): The RLC sublayer offers RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

   3) Packet Data Convergence Protocol (PDCP): The PDCP sublayer offers Radio Bearers (RBs) to the SDAP sublayer. There are two types of Radio Bearers: Data Radio Bearers (DRBs) for data, and Signaling Radio Bearers (SRBs) for control plane.

   4) Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

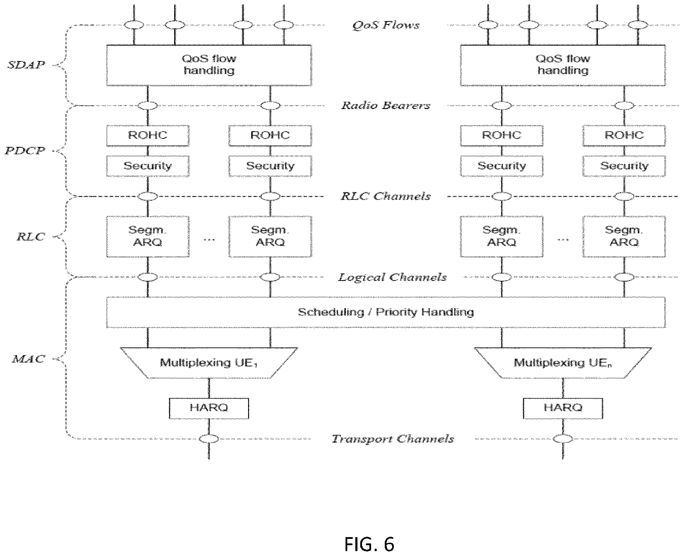

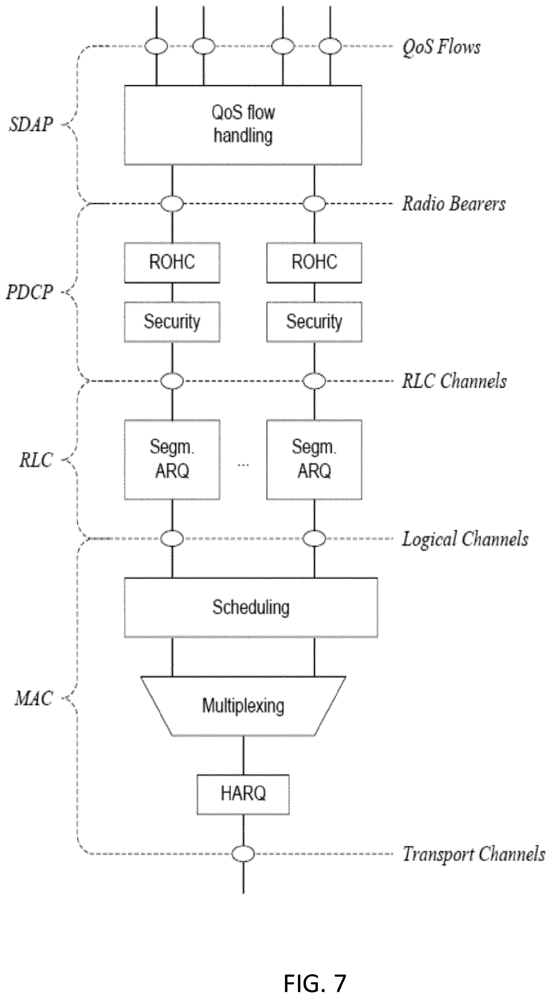

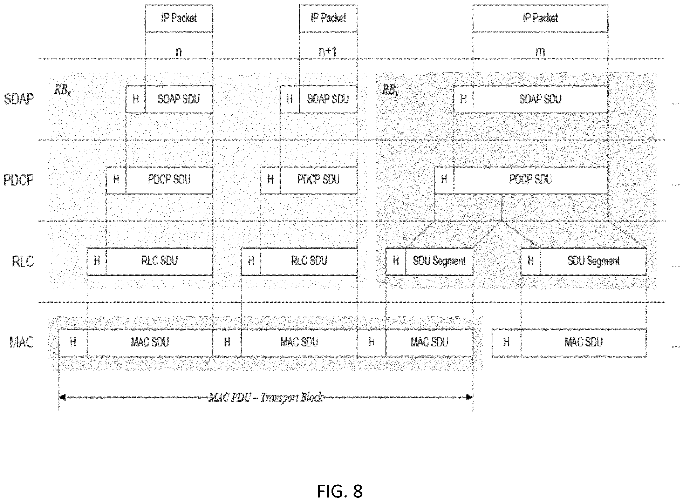

FIG. 6 is a block diagram illustrating DL L2 structure, in accordance with 3GPP TS 38.300. FIG. 7 is a block diagram illustrating UL L2 structure, in accordance with 3GPP TS 38.300. FIG. 8 is a block diagram illustrating L2 data flow example, in accordance with 3GPP TS 38.300 (in FIG. 8, H denotes headers or sub-headers).

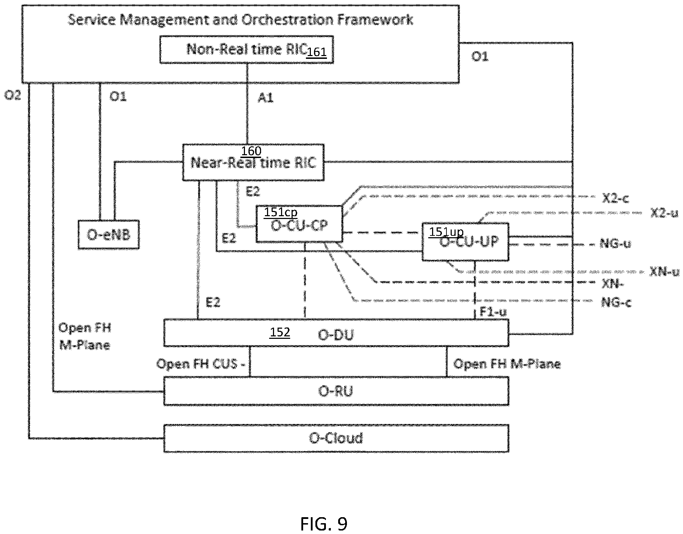

Open Radio Access Network (O-RAN) is based on disaggregated components which are connected through open and standardized interfaces based on 3GPP NG-RAN. An overview of O-RAN with disaggregated RAN CU 151 (Centralized Unit), DU (Distributed Unit), and RU (Radio Unit), near-real-time Radio Intelligent Controller (RIC) 160 and non-real-time RIC 161 is illustrated in FIG. 9.

As shown in FIG. 9, the CU 151 and the DU 152 are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 600 Radio Resource Control (RRC)-connected users and out of these 600, there may be 200 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs 152 and thus multiple cells. For example, a CU-CP could support 1,000 cells and around 100,000 User Equipments (UEs 101). Each UE 101 could support multiple Data Radio Bearers (DRB) and there could be multiple instances of CU-UP (CU-User Plane) to serve these DRBs. For example, each UE 101 could support 4 DRBs, and 400,000 DRBs (corresponding to 100,000 UEs 101) can be served by five CU-UP instances (and one CU-CP instance).

The DU 152 can be located in a private data center, or it could be located at a cell-site. The CU 151 can also be in a private data center or even hosted on a public cloud system. The DU and CU, which are typically located at different physical locations, can be tens of kilometers apart. The CU 151 communicates with a 5G core system, which can also be hosted in the same public cloud system (or could be hosted by a different cloud provider). A RU (Radio Unit) is located at a cell-site and communicates with the DU via a front-haul (FH) interface.

The E2 nodes (CU and DU) are connected to the near-real-time RIC 160 using the E2 interface. The E2 interface is used to send data (e.g., user and/or cell KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

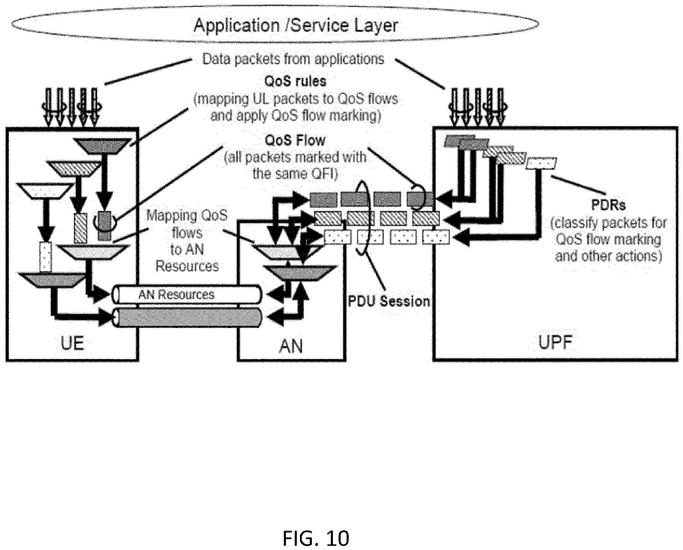

In this section, PDU sessions, DRBs, and quality of service (QoS) flows will be discussed. In 5G networks, PDU connectivity service is a service that provides exchange of PDUs between a UE UE 101 and a data network identified by a Data Network Name (DNN). The PDU Connectivity service is supported via PDU sessions that are established upon request from the UE UE 101. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE UE 101 and CU 151 in RAN; and an NG-U GTP tunnel which is between CU 151 and UPF (User Plane Function) in the core network. FIG. 10 illustrates an example PDU session (in accordance with 3GPP TS 23.501) consisting of multiple DRBs, where each DRB can consist of multiple QoS flows. In FIG. 10, three components are shown for the PDU session: UE UE 101; access network (AN); and UPF, which includes Packet Detection Rules (PDRs).

The following should be noted for 3GPP 5G network architecture:

1) The transport connection between the base station (i.e., CU-UP) and the UPF uses a single GTP-U tunnel per PDU session. The PDU session is identified using GTP-U TEID (Tunnel Endpoint Identifier).

2) The transport connection between the DU 152 and the CU-UP uses a single GTP-U tunnel per DRB.

3) SDAP:

a) The SDAP (Service Adaptation Protocol) Layer receives downlink data from the UPF across the NG-U interface.

b) The SDAP maps one or more QoS Flow(s) onto a specific DRB.

c) The SDAP header is present between the UE UE 101 and the CU 151 (when reflective QoS is enabled), and includes a field to identify the QoS flow within a specific PDU session.

4) User plane protocol includes a field to identify the QoS flow (QoS Flow Identifier) and is present between CU 151 and UPF (in the core network).

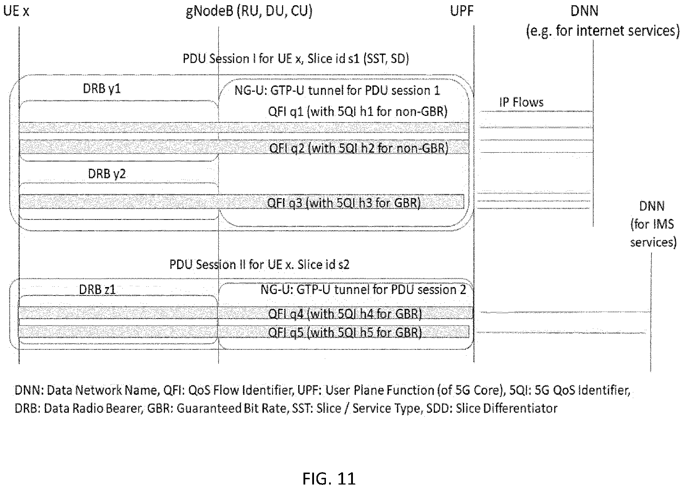

FIG. 11 illustrates multiple PDU sessions involving multiple DRBs and QoS Flow Identifiers (QFIs).

In this section, standardized 5QI to QoS characteristics mapping is discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level Priority5QI, for which the lower the value the higher the priority of the corresponding QoS flow. The fourth column represents the Packet Delay Budget (PDB), which defines an upper bound for the time that a packet may be delayed between the UE UE 101 and the N6 termination point at the UPF. The fifth column represents the Packet Error Rate (PER). The sixth column represents the maximimum data burst volume for delay-critical GBR types. The seventh column represents averaging window for GBR, delay critical GBR types.

For example, as shown in Table 1, 5QI value 1 represents GBR resource type with the default priority value of 20, PDB of 100 ms, PER of 0.01, and averaging window of 2000ms. Conversational voice falls under this catogery. Similarly, as shown in Table 1, 5QI value 7 represents non-GBR resource type with the default priority value of 70, PDB of 100ms and PER of 0.001. Voice, video (live streaming), and interactive gaming fall under this catogery.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electncity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 121 | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26 238 [76]) |
| 72 | | 56 | 300 ms (NOTE 11, NOTE 13, NOTE 15) | $10^{-4}$ | N/A | 2000 ms | "Live" Uplink Streaming (e.g. TS 26 238 [76]) |
| 73 | | 56 | 300 ms (NOTE 11, NOTE 13, NOTE 151 | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26_23S [76]) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc) |
| 7 | | 70 | 100 ms (NOTE 10, NOTE 13) | $10^{-3}$ | N/A | N/A | Voice, Video (Live Streaming) Interactive Gaming |

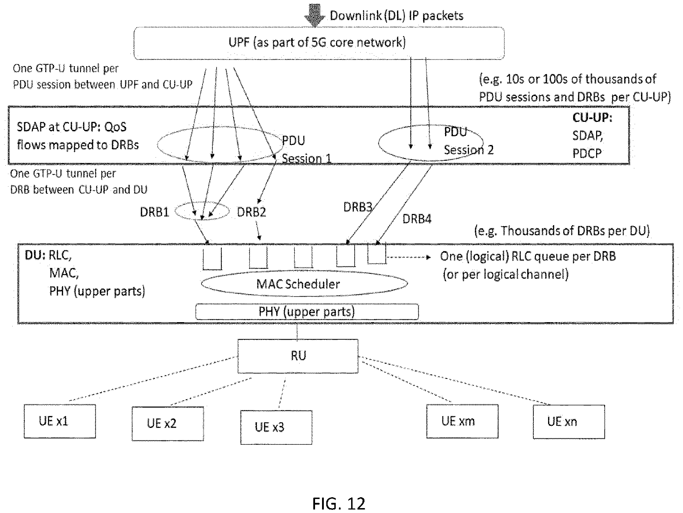

In this section, Radio Resource Management (RRM), e.g., per-DRB RRM, will be discussed. FIG. 12 is a block diagram illustrating RRM with a MAC Scheduler. L2 methods (such as MAC scheduler) play a critical role in allocating radio resources to different UEs 101 in a cellular network. The scheduling priority of a logical channel ($P_{LC}$) is determined as part of MAC scheduler using one of the following:

$$P_{LC} = W_{5QI}*P_{5QI} + W_{GBR}*P_{GBR} + W_{PDB}* P_{PDB} + W_{PF}*P_{PF}, \text{ or}$$

$$P_{LC} = (W_{5QI}*P_{5QI} + W_{PF}*P_{PF}) * \text{maximum} (W_{GBR}*P_{GBR} , W_{PDB}* P_{PDB})$$

Once one of the above methods is used to compute scheduling priority of a logical channel corresponding to a UE 101 in a cell, the same method is used for all other UEs 101.

In the above expressions, the parameters are defined as follows:

a) $P_{5QI}$ is the priority metric corresponding to the QoS class (5QI) of the logical channel. Incoming traffic from a DRB is mapped to Logical Channel (LC) at RLC level. $P_{5QI}$ is the default 5QI priority value, $Priority_{5QI}$, of a QoS flow that is mapped to the current LC. The lower the value of $Priority_{5QI}$ the higher the priority of the corresponding QoS flow. For example, Voice over New Radio (VoNR) (with 5QI of 1) will have a much higher $P_{5QI}$ compared to web browsing (with 5QI of 9).

b) $P_{GBR}$ is the priority metric corresponding to the target bit rate of the corresponding logical channel. The GBR metric $P_{GBR}$ represents the fraction of data that must be delivered to the UE UE 101 within the time left in the current averaging window $T_{avg\_win}$ (as per 5QI table, default is 2000 msec.) to meet the UE's GBR requirement. $P_{GBR}$ is calculated as follows:

$$P_{GBR} = remData/targetData$$

where

$targetData$ is the total data bits to be served in each averaging window $T_{avg\_win}$ in order to meet the GFBR of the given QoS flow;

$remData$ is the amount of data bits remaining to be served within the time left in the current averaging window;

Priority$_{GBR}$ is reset to 1 at the start of each averaging window T$_{avg\_win}$, and should go down to 0 towards the end of this window if the GBR criterion is met; and

Priority$_{GBR}$ = 0 for non-GBR flows.

c) P$_{PDB}$ is the priority metric corresponding to the packet delay budget at DU 152 for the corresponding logical channel. P$_{PDB}$ = 1 if PDB$^{DU}$ <=QDelay$_{RLC}$ and P$_{PDB}$ = 1 / (PDB$^{DU}$ - QDelay$_{RLC}$) if PDB$^{DU}$ > QDelay$_{RLC}$ where both PDB$^{DU}$ (Packet Delay Budget at DU 152) and RLC Queuing delay, QDelay$_{RLC}$, are measured in terms of slots. QDelay$_{RLC}$ = (t-T$_{RLC}$) is the delay of the oldest RLC packet in the QoS flow that has not been scheduled yet, and it is calculated as the difference in time between the SDU insertion in RLC queue to current time where t := current time instant, T$_{RLC}$ := time instant when oldest SDU was inserted in RLC.

d) P$_{PF}$ is the priority metric corresponding to proportional fair metric of the UE UE 101. P$_{PF}$ is the classical PF Metric, calculated on a per UE UE 101 basis as P$_{PF}$ = r / R$_{avg}$

where

r: UE 101 spectral efficiency calculated based on one RB & it's last reported CQI; and

$$R_{avg} = a.R_{avg} + (1\text{-}a).b \,,$$

UE's average throughput, where b>=0 is #bits scheduled in current TTI and 0 < a <= 1 is the IIR filter coefficient

e) In addition, the following weights are defined: W$_{5QI}$ is the weight of P$_{5QI}$; f) W$_{GBR}$ is the weight of P$_{GBR}$; g) W$_{PDB}$ is the weight of P$_{PDB}$; and h) W$_{PF}$ is the weight of P$_{PF}$. Each of the above weights is set to a value between 0 and 1.

A network slice is a logical network that provides specific network capabilities and network characteristics, supporting various service properties for network slice customers (e.g., as specified in 3GPP TS 28.500). A network slice divides a physical network infrastructure into multiple virtual networks, each with its own (dedicated or shared) resources and service level agreements. An S-NSSAI (Single Network Slice Selection Assistance Information) identifies a network slice in 5G systems. As per 3GPP TS 23.501, S-NSSAI is comprised of: i) a Slice/Service type (SST), which refers to the expected Network Slice behavior in terms of features and services; and ii) a Slice Differentiator (SD), which is optional information that complements the Slice/Service type(s) to differentiate amongst multiple Network Slices of the same Slice/Service type.

The structure of S-NSSAI is shown in **Fehler! Verweisquelle konnte nicht gefunden werden..** SST has an 8-bit field, and it may have standardized and/or non-standardized values between 0 and 255. The range of 0 to 127 corresponds to standardized SST range, and the range of 128 to 255 corresponds to operator specific range. 3GPP has standardized some SSTs, e.g., SSTs for eMBB (enhanced mobile broadband), URLLC (ultra-reliable low latency communication) and MIoT (Massive Internet of Things (IoT)) slices.

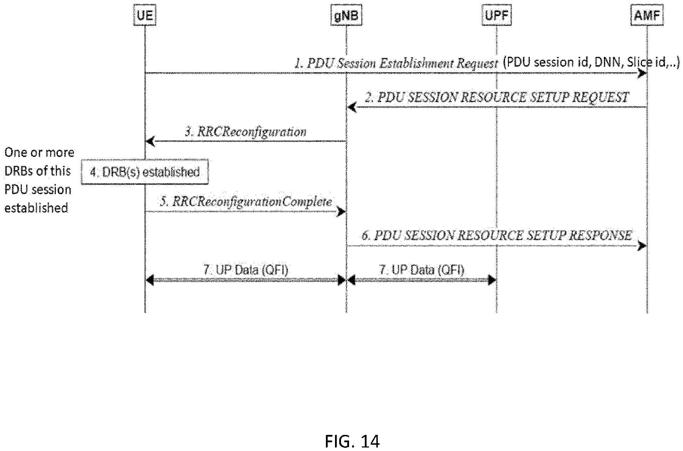

UE 101 first registers with a 5G cellular network identified by its PLMN ID (Public Land Mobile Network Identifier). UE 101 knows which S-NSSAIs are allowed in a given registration area. It then establishes a PDU session associated with a given S-NSSAI in that network towards a target Data Network (DN), such as the internet. As in FIG. 11, one or more QoS flows could be activated within this PDU session. UE 101 can perform data transfer using a network slice for a given data network using that PDU session. A high-level view of UE 101 establishing a PDU session with a specific DNN is shown in FIG. 14.

As described in 3GPP TS 23.501, an NSSAI is a collection of S-NSSAIs. An NSSAI may be a Configured NSSAI, a Requested NSSAI or an Allowed NSSAI. There can be at most eight S-NSSAIs in Allowed and Requested NSSAIs sent in signaling messages between the UE 101 and the network. The Requested NSSAI signaled by the UE 101 to the network allows the network to select the Serving AMF, Network Slice(s) and Network Slice Instance(s) for this UE 101. Network Slice Instance (NSI) consists of set of network function instances and the required resources that are deployed to serve the traffic associated with one or more S-NSSAIs.

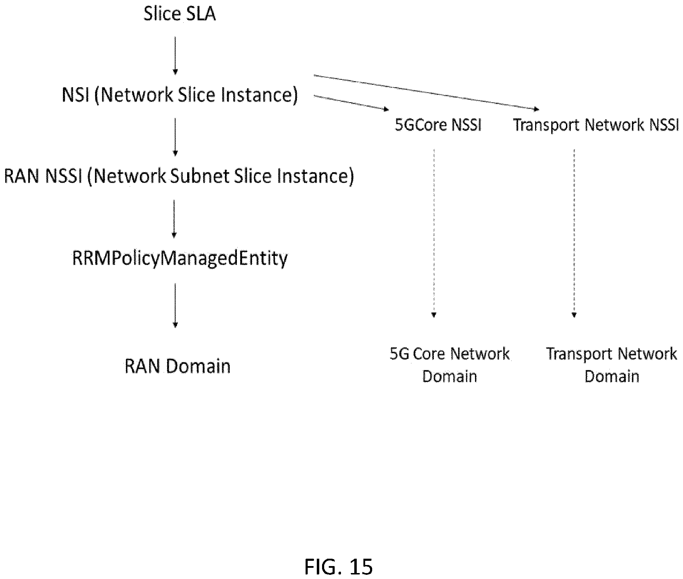

3GPP TS 28.541 includes information model definitions, referred to as Network Resource Model (NRM), for the characterization of network slices. Management representation of a network slice is realized with Information Object Classes (IOCs), named NetworkSlice and NetworkSliceSubnet, as specified in 5G Network Resource Model (NRM), 3GPP TS 28.541. The NetworkSlice IOC and the NetworkSliceSubnet IOC represent the properties of a Network Slice Instance (NSI) and a Network Slice Subnet Instance (NSSI), respectively. As shown in FIG. 15, NSI could be composed of a single NSSI (such as RAN NSSI) or multiple NSSIs (such as RAN NSSI, 5G Core NSSI and Transport Network NSSI).

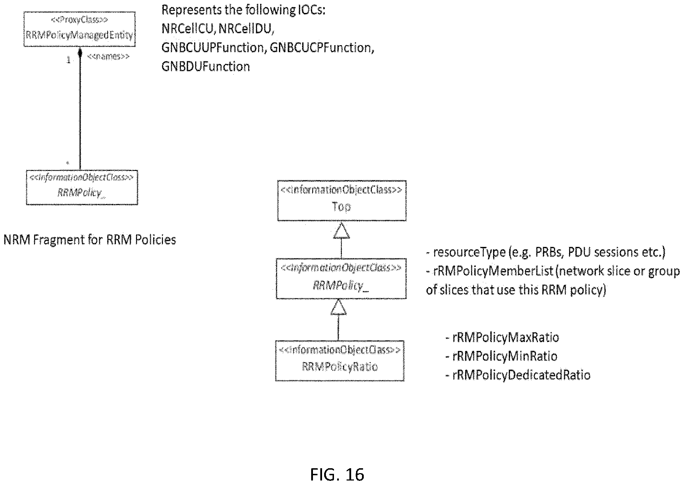

Service profile consists of attributes defined to encode the network-slice-related requirements supported by the NSI. Examples of some attributes in the service profile include: aggregate downlink throughput of a given network slice, per-UE 101 average throughput in the given network slice, and UE 101 density in a given coverage area. FIG. 16 is a simplified view of the classes and attributes of 5G Network Resource Model (NRM) for resource allocation to slices, which classes and attributes are explained below.

1) The RRMPolicyManagedEntity proxy class represents the following IOCs on which RRM policies can be applied: NR Cell resources managed at CU, NR cell resources managed at DU 152, CU-UP 151up function, CU-CP 151cp function, and DU 152 function.

2) The RRMPolicy_IOC defines two attributes:

   a) resource Type attribute (such as PRBs, Number of PDU sessions, Number of RRC connected users, number of UEs 101, number of DRBs etc.).

   i) The following are standardized:

   PRB: Ratio of total PRBs available for allocation (in DU 152).

   RRC Connected Users: Ratio of total number of users within the cell (in CU-CP).

   DRB: Ratio of total number of DRBs (in CU-UP).

   ii) Other vendor-defined resources can be used (such as number of DRBs, number of UEs 101, etc.).

   b) rRMPolicyMemberList attribute: Associated network slice or group of slices for which this policy is defined.

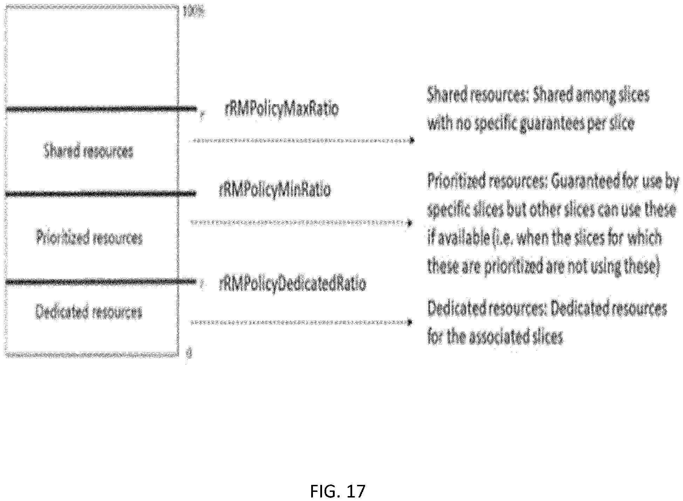

3) The RRMPolicyRatio IOC provides a resource model for distribution of resources among slices. Additional details are provided below, in connection with FIG. 17, which shows the structure of RRMPolicyRatio. Three resource categories (see, e.g., FIG. 17) have been defined in 3GPP TS 28.541 in connection with RRMPolicyRatio: Category I; Category II; and Category III.

Category I: The attribute *rRMPolicyDedicatedRatio* defines the dedicated resource usage quota for the *rRMPolicyMemberList,* including dedicated resources. The sum of the *rRMPolicyDedicatedRatio* values assigned to all RRMPolicyRatio(s) name-contained by the same MangedEntity shall be less or equal to 100. Dedicated resources refer to the resources which are dedicated for use by the associated *rRMPolicyMemberList.* These resources cannot be shared even if the associated *rRMPolicyMember* does not use them. The Dedicated resources quota is represented by *rRMPolicyDedicatedRatio.*

Category II: The attribute *rRMPolicyMinRatio* defines the minimum resource usage quota for the associated *rRMPolicyMemberList,* including at least one of prioritized resources and dedicated resources, i.e., *rRMPolicyMinRatio* defines the resources quota that needs to be guaranteed for use by the associated *rRMPolicyMemberList.* For the same resource type, the sum of the *rRMPolicyMinRatio* values assigned to all RRMPolicyRatio(s) name-contained by same ManagedEntity shall be less or equal 100. Prioritized resources refer to the resources which are preferentially used by the associated *rRMPolicyMemberList.* These resources are guaranteed for use by the associated *rRMPolicyMemberList* when it needs to use them. When not used, these resources may be used by other rRMPolicyMemberList(s) (i.e., the rRMPolicyMemberList(s) defined in RRMPolicyRatio(s) name-contained by the same ManagedEntity). The prioritized resources quota is represented by [*rRMPolicyMinRatio* minus *rRMPolicyDedicatedRatio*].

Category III: The attribute *rRMPolicyMaxRatio* defines the maximum resource usage quota for the associated *rRMPolicyMemberList,* including at least one of shared resources, prioritized resources and dedicated resources. For the same resource type, the sum of the *rRMPolicyMaxRatio* values assigned to all RRMPolicyRatio(s) name-contained by the same MangedEntity can be greater than 100. Shared resources refer to the resources that are shared with other rRMPolicyMemberList(s) (i.e., the *rRMPolicyMemberList(s)* defined in RRMPolicyRatio(s) name-contained by the same ManagedEntity). The shared resources are not guaranteed for use by the associated *rRMPolicyMemberList.* The shared resources quota is represented by [*rRMPolicyMaxRatio* minus *rRMPolicyMinRatio*].

An example scenario involving the following two slices in a cell is provided:

RRM Policy Instance 1:

- S-NSSAI = x1 (for slice 1),
- rRMPolicyDedicatedRatio: 5%

- rRMPolicyMinRatio: 15%
- rRMPolicyMaxRatio: 75%

RRM Policy Instance 2:

- S-NSSAI = x2 (for slice 2)
- rRMPolicyDedicatedRatio: 8%
- rRMPolicyMinRatio: 20%
- rRMPolicyMaxRatio: 85%

For the slice with S-NSSAI x1, dedicated pool of RBs is 5%, and prioritized pool of RBs is 10%. For the slice with S-NSSAI x2, dedicated pool of RBs is 8%, and prioritized pool of RBs is 12% in the example above.

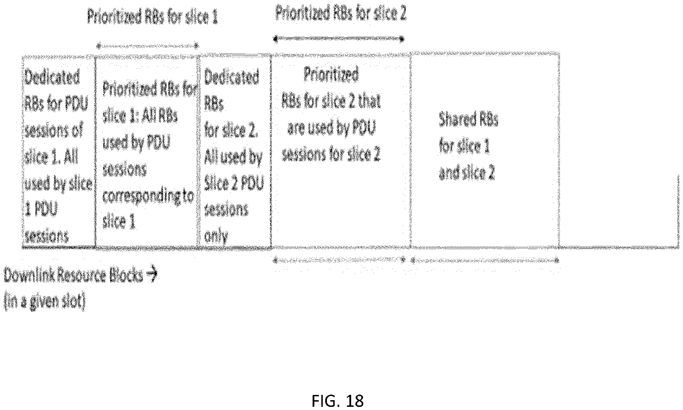

FIG. 18 illustrates another example of resource allocation for DL resource blocks, involving two slices in a cell. In the example illustrated in FIG. 18, each slice uses its share of prioritized RBs. However, in a hypothetical scenario, if a particular slice x does not use all of its prioritized RBs (e.g., in the case of insufficient pending data in the PDU session corresponding to the particular slice x), the remaining RBs could be used by the other slice(s). In addition, although the example of FIG. 18 shows RBs allocated in contiguous manner, this is merely an example, and allocation of RBs need not be contiguous.

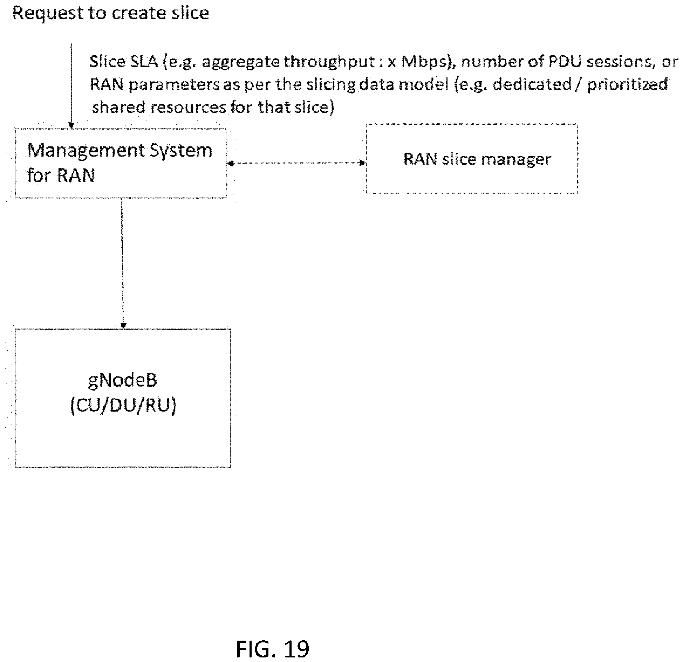

An example system to configure a 5G base station with relevant parameters for a slice is shown in FIG 19. An operator requests RAN management system to create a (RAN) slice. This operator may ask for a service level agreement (SLA) such as aggregate throughput for this slice to be z (e.g., z = 400 Mbps) and number of PDU sessions to be supported for this slice to be maximum y (e.g., y = 100). Data Radio Bearers (DRBs) corresponding to these PDU sessions may also have their own QoS requirements and those would be reflected by the associated 5QIs (5G QoS flow identifiers). The RAN slice management system (or associated with RAN management) can translate this SLA to slice parameters such as dedicated / prioritized and shared resources (as shown in FIG. 16 and FIG. 17) and provide these parameters to gNodeB. Alternatively, the operator may directly provide these slice related parameters (i.e., dedicated / prioritized / shared resources for different resource types with resource types being RBs, number of PDU sessions etc.) to gNodeB. O-RAN slice architecture specification (O-RAN.WG1.Slicing-Architecture-R003-v10.00) considers a slice assurance use case and a slice resource optimization use case.

In an example scenario, gNodeB 106 is communicated parameters which put constraints on resources utilized by DU 152 and CU 151. For example, DU 152 is given dedicated, prioritized and shared quota of RBs (and associated rules) for each slice. Similarly, CU could be given dedicated, prioritized and shared quota of PDU sessions (and associated rules). This resource distribution indicated to gNodeB 106 does not automatically result in the gNodeB 106 satisfying the required service level agreements (SLAs) for various slices supported by the gNodeB 106. For example, gNodeB 106 may be initially supporting a slice with n number of UEs 101 for certain throughput (say, 400 Mbps for that slice) with 75% of UEs 101 in the center and middle zones of the cell and 25% at the edge of the cell. Subsequently, 70% of the UEs 101 may move to the edge of the cell and only 30% of the UEs 101 remain in the center and middle zones of the cell. In this scenario, it is quite possible that gNodeB 106 may not be able to meet its service level requirements (especially in a loaded network).

Therefore, there is a need for an improved system and method for optimizing service-level-policy-based performance management for 5G network slices in O-RAN networks.

SUMMARY

Described is a system and method for optimizing service-level-policy-based performance management for 5G network slices in O-RAN networks.

According to an example embodiment, a method for optimizing service-level-policy-based network performance management in a 5G wireless network slice includes: analyzing, by a slice analytics module, a target slice throughput of the slice in comparison to an observed slice throughput of the slice to compute a slice-throughput error function; and updating, by the slice analytics module, based on at least the slice-throughput error function, radio resource management policy maximum ratio (rRMPolicyMaxRatio) for the slice and a corresponding shared pool of resource blocks (RBs) for the slice.

According to an example embodiment, a method for optimizing service-level-policy-based network performance management in a 5G wireless network slice includes: analyzing, by a slice analytics module, a target slice throughput of the slice in comparison to an observed slice throughput of the slice to compute a slice-throughput error function; and updating, by the slice analytics module, based on at least the slice-throughput error function, radio resource management policy minimum ratio (rRMPolicyMinRatio) for the slice and a corresponding prioritized pool of RBs for the slice.

According to an example embodiment, a method for optimizing service-level-policy-based network performance management in a 5G wireless network slice includes: analyzing, by a slice analytics module, a target slice throughput of the slice in comparison to an observed slice throughput of the slice to compute a slice-throughput error function; and updating, by the slice analytics module, based on at least the slice-throughput error function, radio resource management policy dedicated ratio (rRMPolicyDedicatedRatio) for the slice and a corresponding dedicated pool of RBs for the slice.

The above-described and other features and advantages of the present disclosure will be appreciated and understood by those skilled in the art from the following detailed description, drawings, and appended claims.

DESCRIPTION OF THE DRAWINGS

FIG. 1 is a block diagram illustrating the user plane stack of 5G NR.

FIG. 2 is a block diagram illustrating the user plane protocol stacks for a PDU session of 5G NR.

FIG. 3 is a block diagram illustrating the control plane stack of 5G NR.

FIG. 4 is a block diagram illustrating NG-RAN architecture.

FIG. 5A is a block diagram illustrating separation of CU-CP and CU-UP in NG-RAN architecture.

FIG. 5B shows an example of a Separation of CU-CP (CU-Control Plane) and CU-UP (CU-User Plane) in a 4G ng-eNB.

FIG. 6 is a block diagram illustrating DL L2 structure.

FIG. 7 is a block diagram illustrating UL L2 structure.

FIG. 8 is a block diagram illustrating L2 data flow example.

FIG. 9 illustrates an overview of O-RAN architecture.

FIG. 10 illustrates an example PDU session consisting of multiple DRBs.

FIG. 11 illustrates an example of PDU sessions consisting of multiple DRBs and QFIs.

FIG. 12 is a block diagram illustrating RRM with a MAC Scheduler.

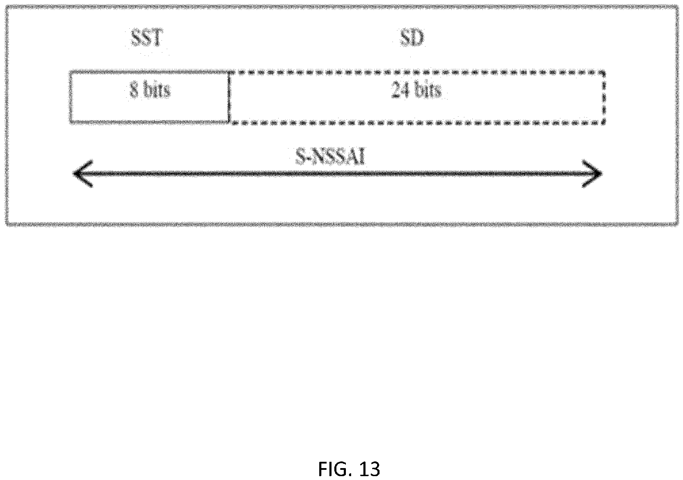

FIG. 13 illustrates the structure of S-NSSAI.

FIG. 14 illustrates a signal flow diagram of a UE 101 establishing a PDU session with a specific Data Network Name (DNN).

FIG. 15 illustrates a high-level view of network slice management.

FIG. 16 illustrates the classes and attributes of 5G Network Resource Model (NRM) for resource allocation to slices.

FIG. 17 illustrates the structure of RRM Policy Ratio.

FIG. 18 illustrates resource allocation for downlink (DL) resource blocks (RBs) in an example with 2 slices.

FIG. 19 illustrates an example system for configuring a RAN slice.

FIG. 20 is a block diagram illustrating an example interaction of a RAN management module with a slice management module and a gNodeB.

FIG. 21 is a block diagram illustrating an example communication of various performance parameters among the RAN management module, gNodeB and slice management/slice analytics module.

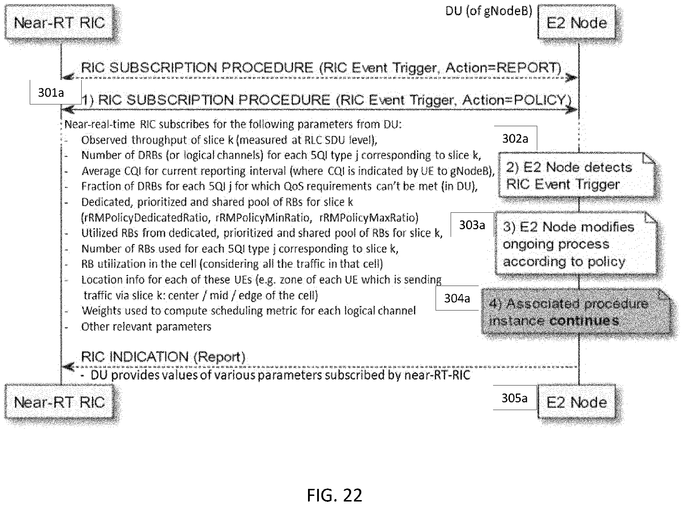

FIG. 22 illustrates a signal flow diagram of near-RT-RIC subscribing to various parameters for slice k from an E2 node, e.g., DU.

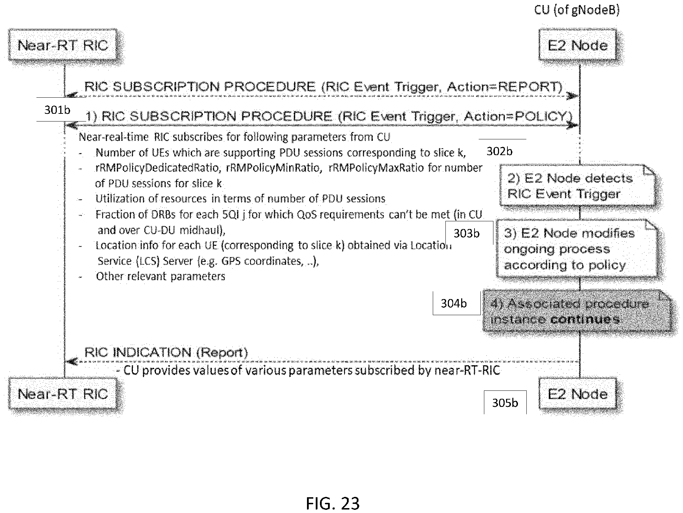

FIG. 23 illustrates a signal flow diagram of Near-RT-RIC subscribing to various parameters for slice k from an E2 node, e.g., CU.

FIG. 24 illustrates a signal flow diagram involving DU, CU and near-RT-RIC for adaptation of parameters for select slices.

FIG. 25 is a block diagram illustrating various steps of an example method of performing slice analytics at the CU-UP.

FIG. 26 illustrates a flowchart of an example method for dynamic adaptation of slicing parameters to improve performance.

FIG. 27 illustrates a flowchart of another example method for dynamic adaptation of slicing parameters to improve performance.

DETAILED DESCRIPTION

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

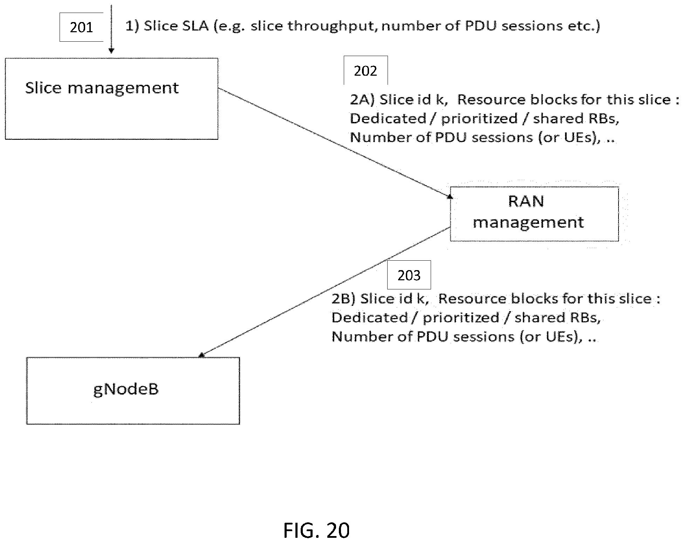

In this section, dynamic adaptations of 5G RAN Slicing-RRM parameters for optimized performance is explained. In the example system shown in **Fehler! Verweisquelle konnte nicht gefunden werden.,** RAN management module interacts with slice management module and provides slice specific parameters to gNodeB 106. The network operator configures a slice by utilizing the slice management module (e.g., as in block 201 shown in FIG. 20). This configuration can include slice SLA (e.g., aggregate throughput for that slice), number of PDU sessions or UEs 101 to be supported in that slice, etc. The slice management module converts each slice SLA to slice parameters needed as per the slice-specific data model. Note that slice data model was shown above in **Fehler! Verweisquelle konnte nicht gefunden werden.** and **Fehler! Verweisquelle konnte nicht gefunden werden..** For example, the slice management module converts the required throughput of a given slice to dedicated, prioritized, and shared resource blocks (RBs) for a gNodeB 106. At block 202, the slice management module communicates these slice parameters to the RAN management module, which in turn communicates these parameters to gNodeB 106 (as shown in step 203 of **Fehler! Verweisquelle konnte nicht gefunden werden.).** Alternatively, the RAN management module itself can convert slice SLA to slice parameters as needed by gNodeB 106 for the slice data model.

A network operator can charge a customer for various aspects of 5G RAN slice, e.g., including the following: i) SLA (e.g., aggregate throughput per-slice); ii) number of applications for each 5QI which are being supported in the particular slice, and fraction of applications for each 5QI for which QoS requirements are being met in the particular slice; and iii) dedicated, prioritized and shared RBs allocated for the particular slice, etc.

An example pricing scheme could be as follows for slice k, supporting $A_j$ applications corresponding to 5QI j (for various values of 5QI j):

$$\text{price}_k = \text{function } (w_k^{Throughput} * T_k , \sum_j w_{k,j}^{frac5QI} * frac_j(A_{j,k}), \sum_j w_{k,j}^{numApps} * A_{j,k}),$$

$$\sum_t \{w_k^d * d_k(t) + w_k^p * p_k(t) + w_k^{sh} * sh_k(t)\}$$

The following parameters are used in the above pricing scheme:

$T_k$: aggregate throughput (in Mbps) for slice k,

$A_{j,k}$ : number of applications of 5QI j which are sending traffic via slice k,

$frac_j (A_{j,k})$: fraction of applications for each 5QI type j for slice k for which QoS requirements are being met,

$d_k(t)$: RBs given to slice k from dedicated pool of RBs in slott,

$p_k(t)$: RBs given to slice k from prioritized pool of RBs in slott,

$sh_k(t)$: RBs given to slice from shared pool of RBs in slot t,

$w_k^{Throughput}$ : weight given to slice k for the throughput part of slice SLA in the pricing scheme,

$w_{k,j}^{numApps}$ : weight given to apps of 5QI j for slice k in the pricing scheme,

$w_{k,j}^{frac5QI}$ : weight given to fraction of apps of type 5QI j for which QoS requirements are met in the corresponding slice k,

$w_k^d$ : weight associated with number of RBs which are assigned from dedicated pool of RBs for slice k,

$w_k^p$ : weight associated with number of RBs which are assigned from prioritized pool of RBs for slice k,

$w_k^{sh}$ : weight associated with number of RBs which are assigned from shared pool of RBs for slice k.

For example, an operator can use a pricing scheme like the one below:

$$\text{price}_k = w_k^{Throughput} * T_k + \sum_j w_{k,j}^{frac5QI} * frac_j(A_{j,k}) + \sum_j w_{k,j}^{numApps} * A_{j,k} +$$

$$\sum_t \{w_k^d * d_k(t) + w_k^p * p_k(t) + w_k^{sh} * sh_k(t)\}$$

In this section, some example pricing models for 5G RAN slicing are described:

1) **Model I:** In this example model, operator can charge mainly on the basis of SLA requirements (such as throughput requirements), number of PDU (or DRB) sessions and QoS requirements of different applications that are sending data from the particular slice, irrespective of the number of RBs that are to be allocated to each slice. In that case: set $w_k^d = 0$, $w_k^p = 0$ and $w_k^{sh} = 0$ .

2) **Model II:** In this example model, the number of RBs (from dedicated, prioritized and shared pools) that are allocated to each slice are considered at the operator side, along with other factors such as slice throughput, QoS for each application, etc. In this case, one or more of weights associated with RBs (i.e., $w_k^d, w_k^p, w_k^{sh}$ ) are non-zero.

3) **Model III:** An alternative model can utilize some component factors from Model I, Model II and/or other factors.

As previously noted above, scheduling metric of a logical channel (or its associated DRB) is computed as below:

$$P_{LC} = (W_{5QI}*P_{5QI} + W_{PF}*P_{PF}) * \text{maximum} (W_{GBR}*P_{GBR}, W_{PDB}* P_{PDB})$$

For allocating RBs to logical channels (or the corresponding DRBs) associated with a slice, RRM data models (as described above) put constraints on the number of RBs that can be allocated to LCs for each slice in a slot (or in a short time interval). According to example embodiments of the present disclosure, a slice-aware scheduler (e.g., running in a DU) can use different policies to allocate resources to certain LCs in each slot.

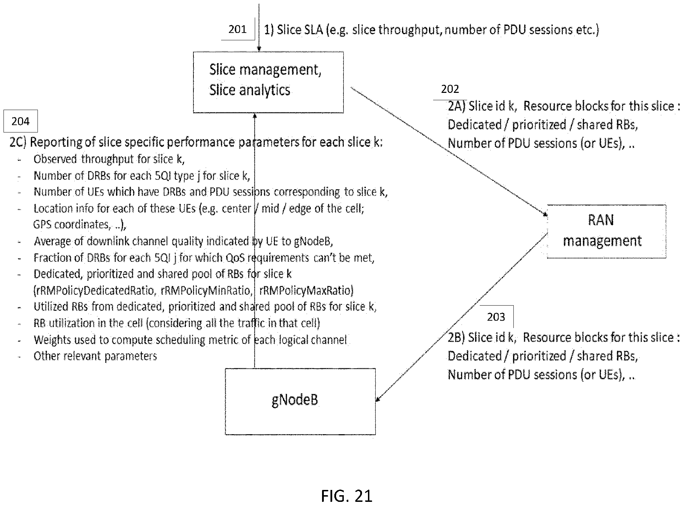

According to an example embodiment of a system and a method, a slice analytics module is utilized, and various slice (and cell) related parameters are communicated from the gNodeB 106 to the slice analytics module (e.g., as shown in block 204 of FIG. 21). These parameters can include, e.g., the following for each slice k:

Slice ID k for which these parameters are being communicated,

Observed throughput for slice k,

Number of DRBs for each 5QI type j for slice k,

Number of UEs 101 which have DRBs and PDU sessions corresponding to slice k,

Location info for each of these UEs 101 (e.g., center/mid/edge of the cell; GPS coordinates, and so on ),

Average of downlink channel quality indicated by UE 101 to gNodeB 106,

Fraction of DRBs for each 5QI j for which QoS requirements cannot be met,

Dedicated, prioritized and shared pool of RBs for slice k (rRMPolicyDedicatedRatio, rRMPolicyMinRatio, rRMPolicyMaxRatio), for downlink and uplink,

Utilized RBs from dedicated, prioritized and shared pool of RBs for slice k,

Percentage of RBs given for each 5QI type j for slice k,

RB utilization in the cell (considering all the traffic in that cell),

Weights used to compute scheduling metric for each logical channel (or its associated DRB) at DU 152 (these weights include $W_{5QI}$ , $W_{PF}$, $W_{GBR}$ and $W_{PDB}$ as previously explained above), and

Other relevant parameters.

Next, these parameters are analyzed at the slice analytics module for each slice. If the slice analytics module finds the need to change parameters for certain slices, it can recommend the following to gNodeB 106 (as shown in Step 2Ain FIG. 21):

Slice IDs for selected slices for which certain parameters need to be changed; and

Updated values of dedicated, prioritized and/or shared resources (along with resource type such as for RBs or number of PDU sessions per-slice or some other resource type) for the selected slices.

In the example embodiment shown in FIG. 21, Steps 201, 202 and 203 are run when a slice is instantiated. After that, Step 204 continues, and Steps 202 and 203 are also run if the slice analytics module changes some parameters related to 5G RAN slices. The slice analytics module can be implemented as follows: i) hosted as part of near-real-time RIC (near-RT-RIC 160) server; ii) located in the gNodeB itself; iii) run at 5G Network Data Analytics Function (NWDAF); or iv) run at an CAM (Operations, Administration Maintenance) server.

An example embodiment of the system and method according to the present disclosure include a slice analytics module located at the near-RT-RIC 160 (for the sake of simplicity, this example method and associated system will be referenced as "Method 1A"). Method 1A provides specific details for non-real-time-RIC 161-based method, which are not found in the O-RAN slice architecture specification O-RAN as of the present disclosure.WG1.Slicing-Architecture-R003-v10.00. For each slice k supported in a cell, at block 301 xApp in near-RT RIC 160 subscribes to various parameters from E2 nodes (i.e., DU 152 and/or CU) as shown in **Fehler! Verweisquelle konnte nicht gefunden werden.** and **Fehler! Verweisquelle konnte nicht gefunden werden..** At block 303a,303b the E2 modifies the ongoing process according to policy as described herein. At block 304a,304b, the associated procedure instance continues. The E2 node (i.e., DU 152 or CU 151) can send these parameters to near-RT-RIC 160 i) periodically, or ii) at block 302a, 302b, based on certain events (e.g., when the value of a parameter changes by more than a threshold). Parameters that the near-RT-RIC 160 subscribes for slice k for a given cell from the corresponding DU 152 can include, among others, the following (as shown in 303a of

**Fehler! Verweisquelle konnte nicht gefunden werden.):**

Observed throughput of slice k (measured at RLC SDU level),

Number of DRBs (or logical channels) for each 5QI type j corresponding to slice k,

Average CQI for current reporting interval (where CQI is indicated by UE 101 to gNodeB),

Fraction of DRBs for each 5QI j for which QoS requirements cannot be met (in DU 152),

Dedicated, prioritized, and shared pool of RBs for slice k, (i.e.,

rRMPolicyDedicatedRatio, rRMPolicyMinRatio, rRMPolicyMaxRatio for RBs for slice k),

Utilized RBs from dedicated, prioritized, and shared pool of RBs for slice k,

Number of RBs used for each 5QI type j corresponding to slice k,

RB utilization in the cell (considering all the traffic in that cell),

Location info for each of these UEs 101 (e.g., zone of each UE 101 which is sending traffic via slice k: center/mid/edge of the cell), and

Weights used to compute scheduling metric for each logical channel (or its associated DRB) at DU 152. These weights include, $W_{5QI}$, $W_{PF}$, $W_{GBR}$ and $W_{PDB}$ previously described above.

At block 303b, parameters that the near-RT-RIC 160 subscribes for slice k for a given cell from the corresponding CU can include, among others, the following (as shown in 303b):

Number of UEs 101 which are supporting PDU sessions corresponding to slice k,

rRMPolicyDedicatedRatio, rRMPolicyMinRatio, rRMPolicyMaxRatio for number of PDU sessions for slice k,

Utilization of resources in terms of number of PDU sessions,

Fraction of DRBs for each 5QI j for which QoS requirements cannot be met (in CU and over CU-DU mid-haul), and

Location information for each UE 101 (such as GPS coordinates) corresponding to slice k, (CU can obtain this by sending a message to Location Service (LCS) Server).

At block 305, for communicating the above parameters from the E2 node (i.e., DU 152 and/or CU 151) to the near-RT-RIC 160, these parameters are added in the E2 protocol (specifically as part of RIC Indication (report) message).

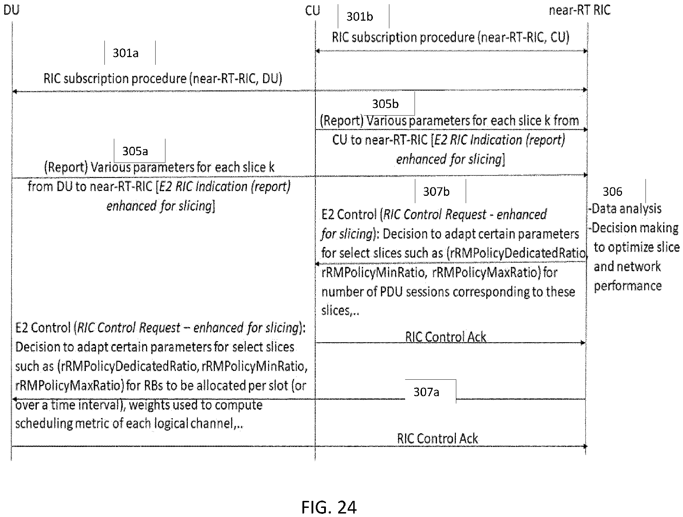

As shown in FIG. 24, at block 306 the near-RT-RIC 160 analyzes various slice-related parameters and decides about the actions to take (e.g., adaptive actions) to improve the performance for specific slices and for the cell and/or the network. For example, these adaptive actions can include changing rRMDedicatedRatio or rRMPolicyMinRatio or rRMPolicyMaxRatio for RBs for a subset of slices, or a change of weights that are used to compute scheduling metric for each logical channel. At blocks 307a, 307b These actions are communicated to the E2 node(s) (i.e., DU 152 at block 307b and/or block 307a CU 151, as applicable) as shown in **Fehler! Verweisquelle konnte nicht gefunden werden..** E2 Control Procedure (with its RIC Control Request) message is enhanced to communicate these parameters to E2 node.

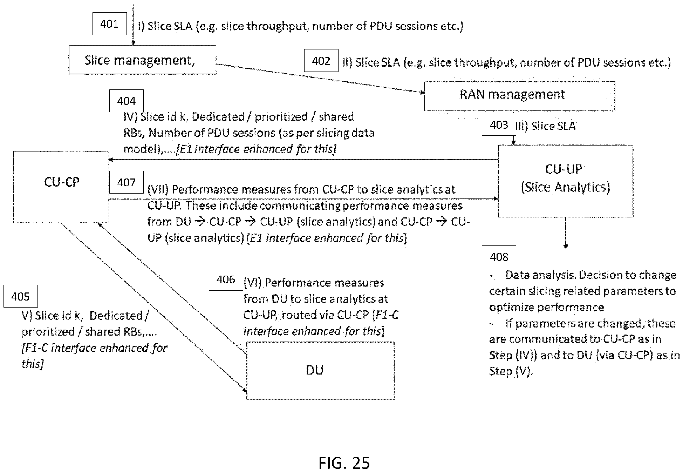

An example embodiment of the system and method according to the present disclosure include a slice analytics module located at CU-UP 151, as shown in FIG. 25 (for the sake of simplicity, this example method and associated system will be referenced as "Method 1B"). Method 1B is not found in the O-RAN slice architecture specification O-RAN as of this disclosure.WG1.Slicing-Architecture-R003-v10.00. Various steps of this example method include the following:

Step 401: Operator configures slice SLA.

Step 402: This slice SLA is communicated from slice management module to RAN management module.

Step 403: Slice SLA is communicated to CU-UP 151up.

Step 404: CU-UP 151up analyzes slice SLA and provides an initial estimate of resources needed for the particular slice as per the slicing data model described previously. For example, the CU-UP 151up provides dedicated, prioritized and shared RBs for DU 152 (i.e., rRMDedicatedRatio, rRMPolicyMinRatio, rRMPolicyMaxRatio for RBs to DU 152), resources in terms of PDU sessions for the particular slice to CU-CP 151cp, etc. E1 interface between CU-CP 151cp and CU-UP is enhanced for this purpose.

Step 405: CU-CP 151cp communicates slice-related parameters to DU 152. Fl-Control (F1-C) interface between DU 152 and CU-CP 151cp is enhanced for this purpose.

Step 406: DU 152 keeps communicating various slice-related performance measures to CU-CP 151cp. This could be done periodically or based on certain events. F1-C interface between DU 152 and CU-CP 151cp is enhanced for this purpose.

Step 407: CU-CP 151cp communicates slice-related performance measures received from DU 152 to CU-CP 151up. In addition, CU-CP 151cp collects slice-related performance measures on its own at CU-CP 151cp and communicates those to CU-CP 151up. E1 interface between CU-CP 151cp and CU-CP 151up is enhanced for this purpose.

Step 408: Slice analytics module at CU-CP 151up analyzes slice-related performance measures that it received from CU-CP 151cp (i.e., CU-CP 151cp 4 CU-CP 151up, with enhanced E1) and from DU 152 (via CU-CP 151cp, i.e., DU 152 → CU-CP 151cp 4 CU-CP 151up, with enhanced F1-C for DU 152 4 CU-CP 151cp and enhanced E1 for CU-CP 151cp 4 CU-CP 151up). If the slice analytics module finds that it can optimize performance of some slices (and their associated PDU sessions), it changes the values of some slice-related parameters, e.g., dedicated, prioritized or shared RBs for some slices, to improve performance. The slice analytics module also specifies the time from which these new parameters should be applied. The slice analytics module (running at CU-CP 151up) provides these updated parameters to CU-CP 151cp, as shown in Step 404 of FIG. 25, and DU-related parameters are communicated by CU-CP 151cp to DU 152, as shown in Step 405 in **Fehler! Verweisquelle konnte nicht gefunden werden..** These are applied at the CU-CP 151cp and at the DU 152 at the time instant specified by the slice-analytics module (running at the CU-CP 151up).

DU provides following slice parameters (or performance measures), among others, for each slice k to CU-CP 151cp in Step (VI) of FIG. 25, and these are communicated from CU-CP 151cp to CU-CP 151up in Step 407 of **Fehler! Verweisquelle konnte nicht gefunden werden.:**

Slice ID k,

Observed throughput of slice k (measured at RLC SDU level),

Average CQI for current reporting interval (where CQI is indicated by UE 101 to gNodeB),

Fraction of DRBs for each 5QI j for which QoS requirements cannot be met (in DU 152),

Utilized RBs from dedicated, prioritized and shared pool of RBs for slice k,

Number of RBs used for each 5QI type j corresponding to slice k,

RB utilization in the cell (considering all the traffic in that cell),

Location information for each of these UEs 101 (e.g., zone of each UE 101 which is sending traffic via slice k: center / mid / edge of the cell), and

Weights used to compute scheduling metric for each logical channel (or its associated DRB) at DU 152. These weights include, $W_{5QI}$, $W_{PF}$, $W_{GBR}$ and $W_{PDB}$ as previously described above.

CU-CP 151cp provides the following slice parameters (or performance measures), among others, for each slice k to CU-CP 151up in Step 407 of FIG. 25 (it should be noted that these parameters are in addition to the performance measures provided by DU 152 to CU-CP 151cp in Step 406, which are further communicated from CU-CP 151cp to DU 152):

Utilization of resources in terms of number of PDU sessions for slice k, and

Location info for each UE 101 (such as GPS coordinates) corresponding to slice k, (CU can obtain this by sending a message to Location Service (LCS) Server).

The slice analytics module at the CU-CP 151up can also use the following parameters, among others, which are directly available at CU-CP 151up:

Fraction of DRBs for each 5QI j for which QoS requirements cannot be met in CU-CP 151up (and over CU-DU mid-haul), and
Percentage of packets for each slice k which need to be retransmitted between CU-CP 151up and DU 152.

An example embodiment of the system and method according to the present disclosure include a slice analytics module that additionally performs data analytics and decision making as part of slice analytics (for the sake of simplicity, this example method and associated system will be referenced as "Method 2"). Method 2 is not found in the O-RAN slice architecture specification O-RAN.WG1.Slicing-Architecture-R003-v10.00). In this example embodiment, slice RRM parameters (such as dedicated, prioritized and shared RBs for each slice k) are initially configured as described in the previous sections. The slice analytics module (e.g., running at near-RT-RIC 160 or at CU-CP 151up), continues to analyse various performance parameters received from gNodeB 106.

In one example embodiment, the slice-analytics module compares target slice throughput (as per the corresponding slice SLA) with observed slice throughput, and computes two error functions (such as the least square error function) for each slice k over M training data instances. These least square functions are defined as below for slice k for the nth interval (consisting of M data instances) over which current allocation of resources is analyzed again:

$$E_k^{SliceThroughput}(n) = \sum_{i=1}^{M} E_k^i$$

$$R_k^{SliceThroughput}(n) = \sum_{i=1}^{M} R_k^i$$

If $targetSliceThroughput_k^i$ is greater than $observedSliceThroughput_k^i$ for data instance i,

$$E_k^i = (targetSliceThroughput_k^i - observedSliceThroughput_k^i)^2$$

$$R_k^i = 0$$

Otherwise (that is, if $observedSliceThroughput_k^i$ is greater than or equal to $targetSliceThroughput_k^i$ for data instance i),

$$E_k^i = 0$$

$$R_k^i = (observedSliceThroughput_k^i - targetSliceThroughput_k^i)^2$$

Here,

$E_k^{SliceThroughput}(n)$: : is error function for slice k for measurement interval n (considering throughput part of slice SLA),

$R_k^{SliceThroughput}(n)$ : is error function for slice k for measurement interval n (considering throughput part of slice SLA),

n: Time interval n where resource allocation decision is evaluated again,

M: instances for which data is measured during measurement interval n. An example is n = 10 seconds and M = 10 instances where throughput is captured every 1 second. As another example, for n = 1 second and M = 1 instance where throughput is captured after every 1 second, $targetSliceThroughput_k^i$ : is the target slice throughput for slice k for data instance i. This is driven from the slice SLA for slice k. For example, if slice SLA is to provide 200 Mbps throughput and if it is specified in the SLA that it should be provided every 1 second, in that case targetSliceThroughput is 200 Mbps for each data instance i for slice k (when choosing n=1 and M=1). In the model, operator also specifies the targetSliceThroughput based on the number of active DRBs at that time. For example, an operator can say that targetSliceThroughput is 20 Mbps when there is traffic corresponding to only one DRB in that slice, targetSlice-Throughput is 40 Mbps when there are two active DRBs sending traffic for that slice, targetSliceThroughput is 100 Mbps when number of active DRBs is between 3 and 6, targetSliceThroughput is 200 Mbps when number of active DRBs for that slice is greater than 6.

$observedSliceThroughput_k^i$ : It is the observed slice throughput for slice k for data instance i.

In another example embodiment, the slice analytics module considers delay-sensitive applications (such as VoNR, video conferencing, video streaming, real-time wireless games, etc.) and compares the target number of data radio bearers (DRBs) which should meet their delay requirements with the observed number of data radio bearers (DRBs) which meet their delay requirements. For this purpose, delay experienced in the 5G RAN system (including DU 152, midhaul and CU) is considered by the slice analytics module. The slice analytics module computes an error function (such as the least square error function) for each slice k over M training data instances. This delay-violation-related least square function is denoted as $E_k^{SliceDRBDelay}(n)$ below for slice k for the nth interval (consisting of M data instances) over which current allocation of resources is analyzed again. One other delay-related least square function, $R_k^{SliceDRBDelay}(n)$, is defined and this considers the case when number of DRBs for which delay requirements are met in the 5G RAN is greater than the target number of DRBs for which delay requirements need to be met in that slice k.

$$E_k^{SliceDRBDelay}(n) = \sum_{i=1}^{M} E_k^i$$

$$R_k^{SliceDRBDelay}(n) = \sum_{i=1}^{M} R_k^i$$

If targetNumDRBDelayk is greater than $observedNumDRBDelay_k^i$ for data instance i,

$$E_k^i = (targetNumDRBDelay_k^i - observedNumDRBDelay_k^i)^2 \, ,$$

$$R_k^i = 0$$

Otherwise, if $observedNumDRBDelay_k^i$ is greater than or equal to targetNumDRBDelayk for data instance i,

$$E_k^i = 0,$$

$$R_k^i = (observedNumDRBDelay_k^i - targetNumDRBDelay_k^i)^2$$

Here,

$E_k^{SliceDRBDelay}(n)$ : is error function for slice k for measurement interval n, considering delay-violation-related part of slice SLA,

$R_k^{SliceDRBDelay}(n)$ : is error function for slice k for measurement interval, considering delay-related aspects,

n : Time interval n where resource allocation decision is evaluated again,

M: instances for which data is measured during measurement interval n.

$targetNumDRBDelay_k^i$ : It is the target number of delay-sensitive DRBs (such as video conferencing, VoNR, video streaming, etc.) which should meet their delay requirements in the 5G RAN for slice k for data instance i. This is driven from the slice SLA for slice k. For example, slice SLA could be to provide 200 Mbps throughput and meet delay requirements for 100 DRBs. In that case, targetNumDRBDelay = 100 if there are at least 100 delay-sensitive DRBs corresponding to that slice communicating traffic over a measurement interval at that time If number of delay-sensitive DRBs sending traffic for that slice is less than 100 (e.g., only 40 delay-sensitive DRBs communicating over a measurement interval at that time), in that case, targetNumDRBDelay is 40 (i.e., minimum of 100 and 40).

$observedNumDRBDelay_k^i$ : It is the observed number of delay-sensitive DRBs (such as video conferencing, VoNR, video streaming, etc.) which should meet their delay requirements in the 5G RAN for slice k for data instance i.

In this section, an example embodiment of the system and method according to the present disclosure include a slice analytics module that updates rRMPolicyMaxRatio and/or the corresponding shared pool of RBs (for the sake of simplicity, this example method and associated system will be referenced as "Method 2A"). In various subvariants of this example embodiment explained in detail below, the slice analytics module i) selectively updates (increases, decreases, or retains) the rRMPolicyMaxRatio for a slice, and/or ii) selectively updates the corresponding shared pool of RBs.

Method 2A-1 (Slice Analytics updating rRMPolicyMaxRatio and the corresponding shared pool of RBs): In the below sections, an example method of selectively increasing rRMPolicyMaxRatio (and/or the corresponding shared pool of RBs) is first discussed, followed by an example method of selectively decreasing rRMPolicyMaxRatio (and/or the corresponding shared pool of RBs).

Method 2A-1a: increasing rRMPolicyMaxRatio (and/or the corresponding shared pool of RBs). If the error function $E_k^{SliceThroughput}$ is positive for consecutive time intervals n, (n+1), ...., (n+$\delta$), or if this error function is positive for $f_1$ out of ($\delta$+1) consecutive time intervals [n, (n+1), ...., (n+8)] and if this fraction (i.e., $f_1$ divided by $\delta$+1 ) is above a threshold, the slice analytics module sets $I_k^{SliceThroughput} = 1$. Otherwise, it sets $I_k^{SliceThroughput} = 0$.

If $E_k^{SliceDRBDelay}$ is positive for $f_2$ out of $\delta$+1 consecutive time intervals and if this fraction (i.e. $f_2$ divided by $\delta$ +1) is above a threshold, the slice analytics module sets $I_k^{SliceDRBDelay} = 1$. Otherwise, it sets $I_k^{SliceDRBDelay} = 0$.

There are various possibilities with the above-outlined scenarios:

1) In one example, $I_k^{SliceThroughput} = 0$ but $I_k^{SliceDRBDelay} = 1$ for certain time intervals as defined above. In this case, slice k is getting the throughput as per its SLA, but the required (or target) number of delay-sensitive DRBs associated with this slice are not able to meet their delay requirements.

2) In another example, $I_k^{SliceThroughput} = 0$ and $I_k^{SliceDRBDelay} = 0$ with slice k getting its throughput and meeting its delay constraints for target (or required) number of DRBs.

3) In another example, i) slice k is not getting its required throughput, and ii) the required number of DRBs associated with this slice are not meeting their delay requirements. In this case, $I_k^{SliceThroughput} = 1$ and $I_k^{SliceDRBDelay} = 1$.

4) In another example, i) slice k is getting its required throughput, and ii) the required number of delay-sensitive DRBs associated with this slice are meeting their delay requirements (e.g., this required number of delay-sensitive DRBs could be a smaller subset of all the DRBs that are supported by this slice). In this case, $I_k^{SliceThroughput} = 1$ and $I_k^{SliceDRBDelay} = 0$.

If either $I_k^{SliceThroughput}$ or $I_k^{SliceDRBDelay}$ is equal to 1, the slice-analytics modules updates rRMPolicyMaxRatio for slice k at the beginning for interval (n+δ+1) as below:

$$rRMPolicyMaxRatio_k(n + \delta + 1) = \text{minimum} \{rRMPolicyMaxRatio\_I_k(n + \delta + 1),$$

$$maxAllowedrRMPolicyMaxRatio_k(n + \delta + 1)\}$$

Here, *rRMPolicyMaxRatio_I$_k$(n + δ + 1)* is updated as follows:

$$rRMPolicyMaxRatio\_I_k(n + \delta + 1)$$

$$= (1 + \beta_k) * rRMPolicyMaxRatio(n) * I_k^{sliceThroughput} +$$

$$\left(1 + \beta_k^d\right) * rRMPolicyMaxRatio(n) * I_k^{sliceDRBDelay}$$

and *maxAllowedrRMPolicyMaxRatio$_k$(n + δ + 1)* is the maximum allowed rRMPolicyMaxRatio for slice k for the interval (n+δ+1).

Value of δ can be chosen based on the policies used by the operator. It can be zero or a positive integer (such as δ =5). For the case, where the operator is looking for close conformance to the slice throughput over smaller time intervals, value of δ can be zero. Otherwise, it can have a higher value (such as δ =10). Here, $\beta_k$ is between 0 and 1 for each slice k. $\beta_k^d$ is also chosen to be between 0 and 1.

<u>Method</u> 2A-1b: decreasing rRMPolicyMaxRatio (and/or the corresponding shared pool of RBs). In this example method, $I_k^{SliceThroughput}$ and $I_k^{SliceDRBDelay}$ as defined above in the previous section are used. In addition, the following conditions are considered:

1) if $I_k^{SliceThroughput}$ is equal to zero and if $I_k^{SliceDRBDelay}$ is also equal to zero; and

2) if the error function $R_k^{SliceThroughput}$ is positive for consecutive time intervals n, (n+1), ...., (n+δ), or if this error function is positive for $t_1$ out of (δ+1) consecutive time intervals [n, (n+1), ...., (n+8)] and if this fraction (i.e. $t_1$ divided by δ +1 ) is above a threshold; and

3) if $R_k^{SliceDRBDelay}$ is positive for $t_2$ out of δ+1 consecutive time intervals (i.e., out of consecutive time intervals n, (n+1), ...., (n+δ)), and if this fraction (i.e., $t_2$ divided by δ+1) is above a threshold,

the slice analytics module updates rRMPolicyMaxRatio as follows:

$$rRMPolicyMaxRatio_k(n + \delta + 1) = (1 - \Delta_k) * rRMPolicyMaxRatio(n)$$

Here, the following conditions apply:

$\Delta_k$ is greater than or equal to 0, and less than 1 for each slice k,

t1 is greater than or equal to 1, and is smaller than ($\delta$+1),

t2 is greater than or equal to 1, and is smaller than ($\delta$+1), and

$\delta$ is greater than or equal to 0 (and can take values such as 0 or 1 or 2 or 3 or ....). Maximum value of $\delta$ is upper bounded by a threshold.

<u>Method 2A-2 (Slice Analytics updating rRMPolicyMaxRatio and the corresponding shared pool of RBs):</u> In the below sections, another example method of selectively increasing rRMPolicyMaxRatio (or the corresponding shared pool of RBs) is first discussed, followed by another example method of selectively decreasing rRMPolicyMaxRatio (or the corresponding shared pool of RBs).

<u>Method 2A-2a:</u> increasing rRMPolicyMaxRatio (and/or the corresponding shared pool of RBs). The slice analytics module considers the difference in the error function, $E_k^{SliceThroughput}$, for consecutive time intervals. If it continues to stay positive for $\delta_d$ time intervals, i.e., $E_k^{sliceThroughput}(n+h+1) - E_k^{SliceThroughput}(n+h) > 0$, for h=0,1, ...., ( $\delta_d$ - 1), the slice analytics module sets $I_k^{SliceThroughput} = 1$. Otherwise, it sets $I_k^{SliceThroughput} = 0$.

If the difference in the error function, $E_k^{SliceDRBDelay}$, for consecutive time intervals continues to stay positive for $\delta_d$ time intervals, the slice analytics module sets $I_k^{SliceDRBDelay} = 1$. Otherwise, it sets $I_k^{SliceDRBDelay} = 0$.

In this case, slice-analytics module updates the rRMMaxPolicyRatio for slice k somewhat more aggressively (to help meet SLA for slice k):

$$rRMPolicyMaxRatio_k(n + \delta_d + 1) = \text{minimum } \{rRMPolicyMaxRatio\_II_k(n + \delta_d + 1),$$
$$maxAllowedrRMPolicyMaxRatio_k(n + \delta + 1)\}$$

Here,

$$rRMPolicyMaxRatio\_II_k(n + \delta_d + 1) = (1 + \beta_k)^p * rRMPolicyMaxRatio(n) *$$
$$I^{SliceThroughput} + (1 + \beta_k^d)^{p1} * rRMPolicyMaxRatio(n) * I_k^{sliceDRBDelay},$$

and *maxAllowedrRMPolicyMaxRatio$_k$(n + $\delta_d$ + 1)* is the maximum allowed rRMPolicyMaxRatio for slice k for the interval (n+$\delta_d$+1).

Here, the following conditions apply:

$\delta_d$ is greater than or equal to one, "p" is also greater than or equal to 1, and p1 is also greater or equal to 1. For example, if $\delta_d$ is chosen to be 8 and difference in the above error function is positive for 8 consecutive time intervals (i.e., max value of h = $\delta_d$ - 1 = 7 here), rRMPolicyMaxRatio is increased as above for the next interval (i.e. at the beginning of the interval n+9).

$\beta_k$ is between 0 and 1 for each slice k.

$\beta_k^d$ is also chosen to be between 0 and 1.

The maxAllowedrRMPolicyMaxRatio is computed using (existing and updated) slicing parameters, information about PRB utilization received for shared pool of RBs for each slice k and operator policies.

As another policy, if the difference in the error function, for $f_1$ out of $\delta_d$ consecutive time intervals is positive and if this fraction (i.e., $f_1$ divided by $\delta_d$ ) is above a threshold, Method 2A-2 can be used in that case too.

<u>Method 2A-1 and Method 2A-2:</u> At the beginning of a time interval j, the slice analytics module updates rRMPolicyMaxRatio using one of these methods, but not both. If the conditions given in both of these methods are met for the error function, $E_k^{SliceThroughput}$ or $E_k^{SliceDRBDelay}$, at the beginning of a time interval j, the slice analytics module updates rRMPolicyMaxRatio using the maximum values of rRMPolicyMaxRatio from Method 2A-1 and Method 2A-2.

Method 2A-2b: decreasing rRMPolicyMaxRatio (and/or the corresponding shared pool of RBs). In this example method, $I_k^{SliceThroughput}$ and $I_k^{SliceDRBDelay}$ as defined above in the previous section are used. If $I_k^{SliceThroughput}$ is equal to zero and if $I_k^{SliceDRBDelay}$ is also equal to zero, the slice-analytics module considers the difference in the error functions, $R_k^{SliceThroughput}$ and $R_k^{SliceDRBDelay}$, for consecutive time intervals. The following conditions are applied:

1) if the difference in $R_k^{SliceThroughput}$ over consecutive time intervals continues to stay positive for $\delta_d$ time intervals [n, (n+1), ...., (n+$\delta_d$)], i.e., $R_k^{sliceThroughput}(n + h + 1) - R_k^{SliceThroughput}(n + h) > 0$, for h=0,1, ...., ($\delta_d$ - 1), or if this error function is positive for $t_1$ out of ($\delta_d$+1) consecutive time intervals [n, (n+1), ...., (n+$\delta_d$)] and if this fraction (i.e. $t_1$ divided by $\delta_d$+1 ) is above a threshold, and

2) if the difference in $R_k^{SliceDRBDelay}$ is positive for $t_2$ out of $\delta_d$+1 consecutive time intervals (i.e., out of consecutive time intervals n, (n+1), ...., (n+$\delta_d$)), and if this fraction (i.e., $t_2$ divided by $\delta_d$+1) is above a threshold,

the slice-analytics module updates rRMPolicyMaxRatio as follows:

$$rRMPolicyMaxRatio_k(n + \delta_d + 1) = \left(1 - \Delta_k^d\right) * rRMPolicyMaxRatio(n)$$

Here,

$\Delta_k^d$ is greater than or equal to 0, and less than 1 for each slice k. Typically, $\Delta_k^d$ will be chosen to be greater than $\Delta_k$ used in the **Fehler! Verweisquelle konnte nicht gefunden werden.,**

t1 is greater than or equal to 1, and is smaller than ($\delta_d$+1),

t2 is greater than or equal to 1, and is smaller than ($\delta_d$+1), and

$\delta_d$ is greater than or equal to 0 (and can take values such as 0 or 1 or 2 or 3 or ....). Maximum value of $\delta_d$ is upper bounded by a threshold.

Method 2B-1 (Slice Analytics updating rRMPolicyMinRatio and the corresponding prioritized pool of RBs): If the particular slice k still does not get the throughput as per its slice-SLA (even after updating rRMPolicyMaxRatio with Methods 2A-1 and 2A-2), the slice analytics module updates the rRMPolicyMinRatio as defined below. In the below sections, an example method of selectively increasing rRMPolicyMinRatio (or the corresponding prioritized pool of RBs) is first discussed, followed by an example method of selectively decreasing rRMPolicyMinRatio (or the corresponding prioritized pool of RBs).

Method 2B-1a: increasing rRMPolicyMinRatio (and the corresponding prioritized pool of RBs). The slice analytics module considers the difference in the error function, $E_k^{SliceThroughput}$, for consecutive time intervals. If it continues to stay positive for $\Upsilon_d$ time intervals (as shown below), i.e., $E_k^{sliceThroughput}(n + h + 1) - E_k^{SliceThroughput}(n + h) > 0$, for h=0,1, ...., ($\Upsilon_d$ - 1), the slice-analytics module sets $I_k^{SliceThroughput} = 1$. Otherwise, the slice analytics module sets $I_k^{SliceThroughput} = 0$. If difference in the error function, $E_k^{SliceDRBDelay}$, for consecutive time intervals continues to stay positive for $\Upsilon_d$ time intervals, slice-analytics module sets $I_k^{SliceDRBDelay} = 1$. Otherwise, it sets $I_k^{SliceDRBDelay} = 0$. In this method, the slice-analytics module updates the rRMPolicyMinRatio for slice k somewhat more aggressively (to help meet SLA for slice k):

$$rRMPolicyMinRatio_k(n + \gamma_d + 1) = \text{minimum }\{rRMPolicyMinRatio\_II_k(n + \gamma_d + 1),$$

$$maxAllowedrRMPolicyMinRatio_k(n + \gamma_d + 1)\}$$

Here,

$$rRMPolicyMinRatio\_II_k(n + \gamma_d + 1)$$

$$= (1 + \theta_k)^q * rRMPolicyMinRatio(n) * I_k^{SliceThroughput}$$

$$+(1 + \theta_k^d)^{q1} * rRMPolicyMinRatio(n) * I_k^{sliceDRBDelay} ,$$

and *maxAllowedrRMPolicyMinRatio$_k$ (n + $\gamma_d$ + 1)* is the maximum rRMPolicyMinRatio permitted in the system for slice k in the time interval (n+$\gamma_d$+1)}.

If the above conditions are not satisfied, the slice analytics module does not change rRMPolicyMinRatio for slice k.

In the above expressions, the following apply:

i) $\gamma_d$ is greater than or equal to one and "q" is also greater than or equal to 1. For example, if $\gamma_d$ is chosen to be 8 and difference in the above error function is positive for 8 consecutive time intervals (i.e., max value of h = $\gamma_d$ - 1 = 7 here), rRMPolicyMaxRatio is increased as above for the next interval (i.e., at the beginning of the interval n+9).

ii) $\gamma_d$ could be chosen to be higher than "δ" used in the Method 2A-1 and "$\delta_d$" used in Method 2A-2. With this, first update only rRMPolicyMaxRatio (as in Method 2A-1 and 2A-2), and then updates rRMPolicyMinRatio if the slice throughput cannot be met using Method 2A-1 and 2A-2.

iii) $\theta_k$ for each slice k is chosen to be between 0 and 1,

iv) $\theta_k^d$ for each slice k is chosen to be between 0 and 1.

v) q is between 0 and 1,

vi) q1 is between 0 and 1

Method 2B-lb: decreasing rRMPolicyMinRatio (and the corresponding prioritized pool of RBs). In this example method, the $I_k^{SliceThroughput}$ and $I_k^{SliceDRBDelay}$ as defined above for Method 2B-1a is used. If $I_k^{SliceThroughput}$ is equal to zero and if $I_k^{SliceDRBDelay}$ is also equal to zero, the slice analytics module considers the difference in the error functions, $R_k^{SliceThroughput}$ and $R_k^{SliceDRBDelay}$, for consecutive time intervals. Specifically, the following conditions are considered:

1) if the difference in $R_k^{SliceThroughput}$ over consecutive time intervals continues to stay positive for $\delta_d$ time intervals [n, (n+1), ...., (n+$\gamma_d$)], i.e. $R_k^{sliceThroughput}(n + h + 1) - R_k^{SliceThroughput}(n + h) > 0$, for h=0,1, ...., ($\gamma_d$- 1), or if this error function is positive for $t_1$ out of ($\gamma_d$ + 1) consecutive time intervals [n, (n+1), ...., (n+$\gamma_d$)] and if this fraction (i.e., $t_1$ divided by ($\gamma_d$ + 1)) is above a threshold, and

2) if the difference in $R_k^{SliceDRBDelay}$ is positive for $t_2$ out of $\gamma_d$+1 consecutive time intervals (i.e., out of consecutive time intervals n, (n+1), ...., (n+$\gamma_d$)), and if this fraction (i.e., $t_2$ divided by $\gamma_d$+1) is above a threshold, the slice analytics module updates rRMPolicyMinRatio as follows:

$$rRMPolicyMinRatio_k(n + \gamma_d + 1) = \left(1 - \nabla_k^d\right) * rRMPolicyMinRatio(n)$$

Here,

$\nabla_k^d$ is greater than or equal to 0, and less than 1 for each slice k. Typically, $\nabla_k^d$ will be chosen to be greater than $\nabla_k$ used in Method 2B-1a.

t1 is greater than or equal to 1, and is smaller than ($\gamma_d$+1).

t2 is greater than or equal to 1, and is smaller than ($\gamma_d$+1).

$\gamma_d$ is greater than or equal to 0 (and can take values such as 0, 1, 2, 3, etc.). Maximum value of $\gamma_d$ is upper bounded by a threshold.

In this section, an example embodiment of the system and method according to the present disclosure includes a slice analytics module that updates rRMPolicyDedicatedRatio and the corresponding dedicated pool of RBs (for the sake of simplicity, this example method and associated system will be referenced as "Method 2C"). In the above-described previous example methods, the following parameters are dynamically adapted for each slice k (if needed) to improve performance: rRMPolicyMaxRatio (and the corresponding shared set of RBs) and rRMPolicyMinRatio (and the corresponding prioritized set of RBs), i.e., an increased, decreased or retained set of RBs in the above two categories over certain time intervals. In contrast, in the present example method, rRMPolicyDedicatedRatio and the corresponding dedicated set of RBs are adapted.

In some cases, a network operator can allocate a minimum set of RBs as dedicated RBs for each slice and may not want to change those dynamically. In some other cases, a network operator may have a policy to allow adaptation of dedicated set of RBs. For this scenario, the shared set of RBs is adapted, and if that adaptation does not improve performance to the extent needed, the prioritized set of RBs are adapted. If this second adaptation still does not improve the performance to the extent needed, the dedicated set of RBs (using rRMPolicyDedicatedRatio) is adapted. For adapting the dedicated set of RBs, similar methods as described above are employed for prioritized set of RBs, with some changes. In Method 2C, for increasing the dedicated set of RBs for a slice, the approach is more conservative than what was described above with respect to the prioritized set of RBs described above in Method 2B-1a, and Method 2C incorporates the following changes to Method 2B-1a:

q = 1,

q1=1,

($\theta_k$ - $\varepsilon_k$) is used instead of ($\theta_k$), where $\varepsilon_k$ is chosen to be between 0 and $\theta_k$, ( $\theta_k^d - \varepsilon_k^d$ ) is used instead of ( $\theta_k^d$ ), where $\varepsilon_k^d$ is chosen to be between 0 and $\theta_k^d$ ), and rRMPolicyDedicatedRatio is used instead of rRMPolicyMinRatio.

In Method 2C, the slice-analytics module updates the rRMPolicyDedicatedRatio for slice k more conservatively as outlined below:

$$rRMPolicyDedicatedRatio_k(n + \gamma_d + 1)$$
$$= \text{minimum} \{rRMPolicyDedicatedatRatio\_II_k(n + \gamma_d + 1),$$
$$maxAllowedrRMPolicyDecicatedRatio_k(n + \gamma_d + 1)\}$$

Here,

$$rRMPolicyDedicatedRatio\_II_k(n + \gamma_d + 1) = (1 + (\theta_k - \varepsilon_k)) *$$
$$rRMPolicyDedicatedRatio(n) * I_k^{SliceThroughput} + (1 + (\theta_k^d - \varepsilon_k^d)) *$$
$$rRMPolicyDedicatedRatio(n) * I_k^{sliceDRBDelay} ,$$

and

*maxAllowedrRMPolicyDedicatedRatio$_k$(n + $\gamma_d$ + 1)* is the maximum rRMPolicyDedicatedRatio permitted in the system for slice k in the time interval (n+$\gamma_d$+1)}.

For the scenarios in which it is desired to decrease the value of rRMPolicyDedicatedRatio for a slice, a method similar to Method 2B-1b is employed.

In this section, an overview of some of the example policy options a network operator can apply using the example method(s) (e.g., Method 2) explained in this specification is provided. For example, operator can choose one or more of the following options:

1) Update only the rRMPolicyMaxRatio for slice k at a given point of time. In this case, the corresponding shared pool of resources are updated for this slice (but prioritized and dedicated pools of resources are not updated for this slice).

2) Update the rRMPolicyMinRatio for a slice at a given point of time. In this case, the corresponding prioritized pool of resources is updated, but dedicated and shared pools of RBs are not updated for this slice at that time. Note that rRMPolicyMaxRatio may still need to be and can be updated if rRMPolicyMinRatio is updated. For example, if rRMPolicyMinRatio is increased (and thus the corresponding prioritized pool of resources is increased), rRMPolicyMaxRatio is to be increased to reflect the maximum pool of resources that this slice can use (across dedicated, prioritized and shared pool of resources).

3) Update the rRMPolicyDedicatedRatio for a slice at a given point of time. In this case, the corresponding dedicated pool of resources is updated, but prioritized and shared pools of resources are not updated for this slice at that time. Note that rRMPolicyMaxRatio may still need to be updated if rRMPolicyDedicatedRatio is updated. For example, if rRMPolicyDedicatedRatio is increased (and thus the corresponding dedicated pool of resources is increased), rRMPolicyMaxRatio is to be increased to reflect the maximum pool of resources that this slice can use (across dedicated, prioritized and shared pools of resources).

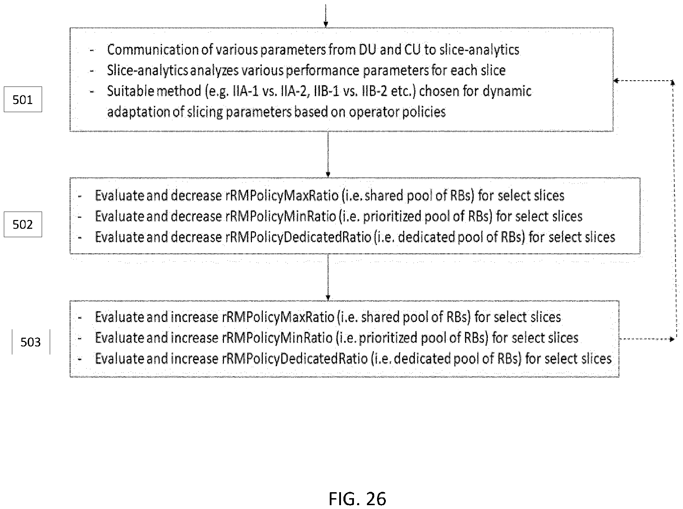

In another example option, after the choice of method at block 501, a network operator can apply the policies as shown in FIG. 26. In this example, at block 502, slices for which rRMPolicyDedicatedRatio, rRMPolicyMinRatio or rRMPolicyMaxRatio can be decreased at a given point of time (e.g., using techniques as illustrated in FIG. 25 and previously explained in connection with the example methods in this specification) are identified. Subsequently, these additional resources are used and allocated to different slices, e.g., as illustrated in the step 503 of FIG. 26 and explained in connection with the example methods in this specification). With this, more than one of the dedicated, prioritized, or shared pool of resources can change at the same time for a given slice, and this is derived from the updated values of rRMPolicyDedicatedRatio, rRMPolicyMinRatio or rRMPolicyMaxRatio (as explained in connection with Method 2).

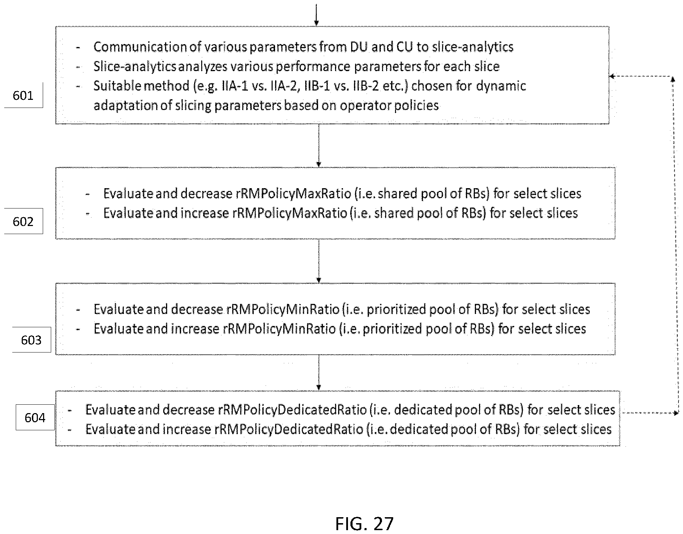

In another example option illustrated in FIG. 27, after the choice of method at block 601, the following steps are performed.

1) At block 602, a first look identifies slices for which rRMPolicyMaxRatio can be decreased at a given point of time by reducing the pool of shared resources allocated to these slices. Additional resources are identified and the shared resources are allocated to other slices, if needed. The amount of additional shared resources to be allocated to a slice is reflected via updated rRMPolicyMaxRatio, e.g., as explained in connection with the various methods in this specification.

2) At block 603, slices for which rRMPolicyMinRatio can be decreased by reducing prioritized pool of resources at a given point of time are searched for and identified. Considered are i) additional resources available from the reduction in this step, and ii) resources left over from block 602. These are used to increase prioritized resources for some other slices, if needed. The amount of additional prioritized resources to be allocated to a slice is reflected via updated rRMPolicyMinRatio, e.g., as explained in connection with the various methods in this specification.

3) At block 604, slices for which rRMPolicyDedicatedRatio can be decreased by reducing dedicated pool of resources at a given point of time are searched for and identified. Considered are i) additional resources available from the reduction in this step, and ii) resources left over from blocks 602 and 603. These are used to increase dedicated resources for some slices, if needed. The amount of additional dedicated resources to be allocated to a slice is reflected via updated rRMPolicyDedicatedRatio, e.g., as explained in connection with the various methods in this specification.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G and other similar wireless networks that support slicing types of techniques. In addition, for 5G slicing, although example methods with near-real-time RIC 160 were provided in this specification, in some deployment scenarios, a network operator can opt to adapt slicing radio resource parameters on longer time scale (e.g., every 2000 ms), and can use non-real-time RIC 161 in such scenarios. Methods to adapt slicing RRM parameters (such as Method II as in section 2.2) is applicable in that case also. In this case, various slicing related parameters are communicated to non-real-time RIC 161 and Method II is run at non-RT-RIC 161. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP, O-RAN, and IETF technical specifications (TS), standards (including proposed standards), technical reports (TR) and other papers are incorporated by reference in their entirety hereby, define the related terms and architecture reference models that follow.

O-RAN.WG4.MP.0-R003-v13.00
3GPP TS 23.501 V 18.1.0 2023-04-05
3GPP TS 28.500 V. 17.0.0 2023-03-31
3GPP TS 28.541 V 18.4.1 2023-06-30
3GPP TS 38.300 V 17.4.0 2023-03-28
O-RAN. WG1. Slicing-Architecture-R003-vl0.00
*Acronyms*
5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
BS: Base Station
CQI: Channel Quality Indicator
CP: Control Plane
CU: Centralized Unit
CU-CP: Centralized Unit- Control Plane
CU-UP: Centralized Unit- User Plane
DL: Downlink
DDDS: DL Data Delivery Status
DNN: Data Network Name
DRB: Data Radio Bearer
DU: Distributed Unit
eNB: evolved NodeB
EPC: Evolved Packet Core
GBR: Guaranteed Bit Rate
gNB: gNodeB
GTP-U: GPRS Tunneling Protocol - User Plane
IP: Internet Protocol
L1: Layer 1
L2: Layer 2
L3: Layer 3
L4S: Low Latency, Low Loss and Scalable Throughput
LC: Logical Channel
MAC: Medium Access Control
NACK: Negative Acknowledgement
NAS: Non-Access Stratum
NR-U: New Radio - User Plane
NSI: Network Slice Instance
NSSI: Network Slice Subnet Instance

O-RAN: Open Radio Access Network
PDB: Packet Delay Budget
PDCP : Packet Data Convergence Protocol
PDU: Protocol Data Unit
PHY: Physical Layer
QCI: QoS Class Identifier
QFI: QoS Flow Id
QoS : Quality of Service
QFI: QoS Flow Identifier
RAT: Radio Access Technology
RB: Resource Block
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SST: Slice / Service Type
TCP: Transmission Control Protocol
TEID: Tunnel Endpoint Identifier
UE: User Equipment
UP: User Plane
UL: Uplink
UM: Unacknowledged Mode
UPF: User Plane Function

**Claims**

1. A method for optimizing service-level-policy-based network performance management in a 5G wireless network slice, comprising

   analyzing, by a slice analytics module, a target slice throughput of the slice in comparison to an observed slice throughput of the slice to compute a slice-throughput error function; and
   updating, by the slice analytics module, based on at least the slice-throughput error function, at least one of the following: i) radio resource management policy maximum ratio (rRMPolicyMaxRatio) for the slice; ii) radio resource management policy minimum ratio (rRMPolicyMinRatio) for the slice; and iii) radio resource management policy dedicated ratio (rRMPolicyDedicatedRatio) for the slice.

2. The method of claim 1, further comprising at least one of:

   i) along with updating the rRMPolicyMaxRatio, further updating a corresponding shared pool of resource blocks (RBs) for the slice;
   ii) along with updating the rRMPolicyMinRatio, further updating a corresponding prioritized pool of RBs for the slice; and
   iii) along with updating the rRMPolicyDedicatedRatio, further updating a corresponding dedicated pool of RBs for the slice.

3. The method of claims 1 or 2, wherein the updating comprises at least one of:

i) increasing the rRMPolicyMaxRatio for the slice;
ii) decreasing the rRMPolicyMaxRatio for the slice;
iii) increasing the rRMPolicyMinRatio for the slice;
iv) decreasing the rRMPolicyMinRatio for the slice;
v) increasing the rRMPolicyDedicatedRatio for the slice; and
vi) decreasing the rRMPolicyDedicatedRatio for the slice.

4. The method of claim 1, wherein the slice analytics module is at a near-RT RIC 161, the method further comprising:

subscribing, at the near-RT RIC 161, to slice-related parameters, from an E2 node;
receiving the slice-related parameters the near-RT RIC 161 from the E2 node;
analyzing, by slice analytics module, the slice-related parameters to determine an adaptive action for the updating; and
communicating the adaptive action to the E2 node.

5. The method of claim 4, wherein the near-RT RIC 161 receives the slice-related parameters from the E2 node periodically or on an event basis.

6. The method of claims 4 or 5, wherein the E2 node is a Distributed Unit (DU), and the slice-related parameters comprise at least one of:

an observed throughput of the slice;
a number of Data Radio Bearers (DRBs) or logical channels for each 5G Quality of Service Identifier (5QI) type corresponding to the slice;
an average Channel Quality Indicator (CQI) for a current reporting interval, where the CQI is indicated by a User Equipment (UE) 101 to a gNodeB (gNB) 106;
a fraction of DRBs for each 5QI j for which a Quality of Service (QoS) requirement cannot be met by the DU 152;
a dedicated, prioritized, and shared pool of (Resource Blocks) RBs for the slice;
utilized RBs from the dedicated, prioritized, and shared pool of RBs for the slice;
a number of RBs used for each 5QI type corresponding to the slice;
an RB utilization in the cell;
A location info each of the UEs 101; and
weights used to compute a scheduling metric for each of the DRBs or logical channels at the DU 152.

7. The method of claim 4, wherein the E2 node is a Centralized Unit (CU), and the slice-related parameters comprise at least one of:

a number of UEs 101 which are supporting Protocol Data Unit (PDU) sessions corresponding to the slice;
the RMPolicyDedicatedRatio, the rRMPolicyMinRatio, and the rRMPolicyMaxRatio for a number of the PDU sessions for the slice;
utilization of resources in terms of the number of PDU sessions;
a fraction of DRBs for each 5QI for which QoS requirements cannot be met in the CU 151 and over a CU-DU mid-haul; and
location information for each UE 101 corresponding to the slice.

8. The method of claims 4 or 5, wherein the E2 node is the CU, wherein the adaptive action comprises at least one of:

changing rRMDedicatedRatio or rRMPolicyMinRatio or rRMPolicyMaxRatio for RBs for a subset of slices; and
changing of a plurality of weights that are used to compute a scheduling metric for each of a plurality of logical channels.

9. The method of claims 7 or 8, wherein the slice analytics module is at a Centralized Unit - User Plane (CU-UP) , the method further comprising:

configuring a slice Service Level Agreement (SLA) at an operator slice management module;
communicating the slice SLA from a slice management module to a Radio Access Network (RAN) management module;
communicating the Slice SLA to the CU-CP;

analyzing, at the CU-CP the slice SLA and providing a CU-CP an initial estimate of resources needed for the slice for the update;
communicating slice-related parameters from the CU-CP to DU;
communicating, by the CU-CP, slice-related performance measures to CU-CP;
analyzing, by the slice analytics module at CU-CP, slice-related performance measures that it received from the CU-CP and from the DU; and
if the slice analytics module determines it can optimize performance of some slices, changing the values of slice-related parameters to improve performance, and specifying a time from which these new parameters can be applied.

10. The method of any of the above claims, further comprising:

continuously analyzing slice-related performance measures at the E2 node; and
performing data analytics at the slice analytics module;
wherein the data analytics comprises computing a plurality of error functions for each slice k over M training data instances, including at least one of:

a) comparing the target slice throughput error with the observed slice throughput; and
b) analyzing delay-sensitive applications and comparing a target number of data radio bearers (DRBs) which should meet the delay requirements with an observed number of data radio bearers (DRBs) which meet their delay requirements;

the method preferably comprising:

computing the plurality of error functions as least square functions; **characterized in that**
for a), the slice analytics module computes the plurality of error functions as:

$$E_k^{SliceThroughput}(n) = \sum_{i=1}^{M} E_k^i$$

$$R_k^{SliceThroughput}(n) = \sum_{i=1}^{M} R_k^i$$

or for b), the slice analytics module computes the plurality of error functions as delay-related error functions:

$$E_k^{SliceDRBDelay}(n) = \sum_{i=1}^{M} E_k^i$$

$$R_k^{SliceDRBDelay}(n) = \sum_{i=1}^{M} R_k^i$$

11. The method of claim 10, further comprising:
updating, at the slice analytics module, the rRMPolicyMaxRatio or a corresponding shared pool of RBs, or both.

12. The method of claim 11, wherein the slice analytics module i) selectively updates the rRMPolicyMaxRatio for a slice or ii) selectively updates a corresponding shared pool of RBs, or both i) and ii).

13. The method of claim 12, further comprising:
updating, at the slice analytics module, the rRMPolicyMinRatio, or a corresponding shared pool of RBs, or both.

14. The method of claims 12 or 13, wherein the slice analytics module:

identifies a difference in the slice-throughput error function, $E_k^{SliceThroughput}$ for consecutive time intervals and sets an $I_k^{SliceThroughput}$ ; and

updates or maintains the rRMPolicyMinRatio for slice k based on the slice-throughput error function. the method preferably **characterized in that** the slice analytics module:

if the $I_k^{SliceThroughput}$ is equal to zero and an $I_k^{SliceDRBDelay}$ is equal to zero, identifies a difference in a next error functions slice-throughput error function error, $R_k^{SliceThroughput}$ , and a next delay-related error functions: $R_k^{SliceDRBDelay}$ , for consecutive time intervals; and

updates or maintains the rRMPolicyMinRatio for slice k based on the next slice-throughput error function error, $R_k^{SliceThroughput}$ and the next delay-related error functions: $R_k^{SliceDRBDelay}$ .

**15.** The method of claim 14 wherein:

the slice-analytics module updates the rRMPolicyDedicatedRatio for slice k as:

$$rRMPolicyMinRatio_k(n + \gamma_d + 1) = \text{minimum } \{rRMPolicyMinRatio\_II_k(n + \gamma_d + 1),$$
$$maxAllowedrRMPolicyMinRatio_k(n + \gamma_d + 1)\}$$

where,

$$rRMPolicyMinRatio\_II_k(n + \gamma_d + 1)$$
$$= (1 + \theta_k)^q * rRMPolicyMinRatio(n) * I_k^{SliceThroughput}$$
$$+ (1 + \theta_k^d)^{q1} * rRMPolicyMinRatio(n) * I_k^{sliceDRBDelay} ,$$

and *maxAllowedrRMPolicyMinRatio_k* (n + $\gamma_d$ + 1) is the maximum rRMPolicyMinRatio permitted for slice k in the time interval (n+$\gamma_d$+1)},
where

    i) $\gamma_d$ is greater than or equal to one and "q" is also greater than or equal to 1;
    ii) $\gamma_d$ can be chosen to be higher than "δ"
    iii) $\theta_k$ for each slice k is chosen to be between 0 and 1,

    iv) $\theta_k^d$ for each slice k is chosen to be between 0 and 1.
    v) q is between 0 and 1, and
    vi) q1 is between 0 and 1;

or
the slice-analytics module updates the rRMPolicyDedicatedRatio for slice k as:

$$rRMPolicyDedicatedRatio_k(n + \gamma_d + 1)$$
$$= \text{minimum } \{rRMPolicyDedicatedatRatio\_II_k(n + \gamma_d + 1),$$
$$maxAllowedrRMPolicyDecicatedRatio_k(n + \gamma_d + 1)\}$$

where

$$rRMPolicyDedicatedRatio\_II_k(n + \gamma_d + 1) = (1 + (\theta_k - \varepsilon_k)) *$$

$$rRMPolicyDedicatedRatio(n) * I_k^{SliceThroughput} + (1 + (\theta_k^d - \varepsilon_k^d)) *$$

$$rRMPolicyDedicatedRatio(n) * I_k^{sliceDRBDelay} ,$$

and
*maxAllowedrRMPolicyDedicatedRatio_k*($n + \gamma_d$ + 1) is a maximum rRMPolicyDedicatedRatio permitted for slice k in the time interval (n+$\gamma_d$+1)}.
where

    i) $\gamma$_d is greater than or equal to one and "q" is also greater than or equal to 1,
    ii) $\gamma$_d can be chosen to be higher than "δ",
    iii) ($\theta_k$ - $\varepsilon_k$), where $\varepsilon_k$ is chosen to be between 0 and $\theta_k$,
    iv) ( $\theta_k^d - \varepsilon_k^d$ ), where $\varepsilon_k^d$ is chosen to be between 0 and $\theta_k^d$ )
    v) q is 1, and
    vi) q1 is1.

FIG. 1

FIG. 2

| UE | 101 | | gNB | 106 | | AMF |
|---|---|---|---|---|---|---|
| NAS | | | | | | NAS |
| RRC | | | RRC | | | |
| PDCP | | | PDCP | | | |
| RLC | | | RLC | | | |
| MAC | | | MAC | | | |
| PHY | | | PHY | | | |

FIG. 3

5GC

NG

NG

**NG-RAN**

gNB

106

Xn-C

gNB

106

gNB-CU

151

F1

F1

152

gNB-DU

152

gNB-DU

FIG. 4

FIG. 5A

4G ng-eNB

ng-eNB-CU-CP

ng-eNB-CU-UP

E1

W1-C

W1-U

ng-eNB

ng-eNB-DU

ng-eNB-DU

FIG. 5B

FIG. 6

FIG. 7

FIG. 8

FIG. 9

FIG. 10

UE x                  gNodeB (RU, DU, CU)          UPF         DNN
(e.g. for internet services)

PDU Session I for UE x, Slice id s1 (SST, SD)

DRB y1            NG-U: GTP-U tunnel for PDU session 1         IP Flows

QFI q1 (with 5QI h1 for non-GBR)

QFI q2 (with 5QI h2 for non-GBR)

DRB y2

QFI q3 (with 5QI h3 for GBR)                DNN
(for IMS
services)

PDU Session II for UE x. Slice id s2

DRB z1            NG-U: GTP-U tunnel for PDU session 2

QFI q4 (with 5QI h4 for GBR)

QFI q5 (with 5QI h5 for GBR)

DNN: Data Network Name, QFI: QoS Flow Identifier, UPF: User Plane Function (of 5G Core), 5QI: 5G QoS Identifier,
DRB: Data Radio Bearer, GBR: Guaranteed Bit Rate, SST: Slice / Service Type, SDD: Slice Differentiator

FIG. 11

Downlink (DL) IP packets

UPF (as part of 5G core network)

One GTP-U tunnel per
PDU session between UPF and CU-UP

(e.g. 10s or 100s of thousands of
PDU sessions and DRBs per CU-UP)

**CU-UP:**

SDAP at CU-UP: QoS
flows mapped to DRBs

PDU
Session 1

PDU
Session 2

SDAP,
PDCP

One GTP-U tunnel per
DRB between CU-UP and DU

DRB1      DRB2          DRB3
                           DRB4

(e.g. Thousands of DRBs per DU)

DU: RLC,
    MAC,
    PHY (upper parts)

MAC Scheduler

One (logical) RLC queue per DRB
(or per logical channel)

PHY (upper parts)

RU

UE x1       UE x2       UE x3              UE xm       UE xn

FIG. 12

43

FIG. 13

FIG. 14

Slice SLA

↓

NSI (Network Slice Instance)

5GCore NSSI    Transport Network NSSI

↓

RAN NSSI (Network Subnet Slice Instance)

↓

RRMPolicyManagedEntity

↓

RAN Domain

5G Core Network
Domain

Transport Network
Domain

FIG. 15

Represents the following IOCs:
NRCellCU, NRCellDU,
GNBCUUPFunction, GNBCUCPFunction,
GNBDUFunction

NRM Fragment for RRM Policies

- resourceType (e.g. PRBs, PDU sessions etc.)
- rRMPolicyMemberList (network slice or group of slices that use this RRM policy)

- rRMPolicyMaxRatio
- rRMPolicyMinRatio
- rRMPolicyDedicatedRatio

FIG. 16

Shared resources: Shared among slices
with no specific guarantees per slice

Prioritized resources: Guaranteed for use by
specific slices but other slices can use these
if available (i.e. when the slices for which
these are prioritized are not using these)

Dedicated resources: Dedicated resources
for the associated slices

FIG. 17

FIG. 18

Request to create slice

Slice SLA (e.g. aggregate throughput : x Mbps), number of PDU sessions, or
RAN parameters as per the slicing data model (e.g. dedicated / prioritized
shared resources for that slice)

| Management System for RAN |  →  | RAN slice manager |

gNodeB
(CU/DU/RU)

FIG. 19

201 1) Slice SLA (e.g. slice throughput, number of PDU sessions etc.)

**Slice management**

202

2A) Slice id k, Resource blocks for this slice :
Dedicated / prioritized / shared RBs,
Number of PDU sessions (or UEs), ..

**RAN management**

203

2B) Slice id k, Resource blocks for this slice :
Dedicated / prioritized / shared RBs,
Number of PDU sessions (or UEs), ..

**gNodeB**

FIG. 20

201 | 1) Slice SLA (e.g. slice throughput, number of PDU sessions etc.)

Slice management,
Slice analytics

202
2A) Slice id k, Resource blocks for this slice :
Dedicated / prioritized / shared RBs,
Number of PDU sessions (or UEs), ..

204

2C) Reporting of slice specific performance parameters for each slice k:
- Observed throughput for slice k,
- Number of DRBs for each 5QI type j for slice k,
- Number of UEs which have DRBs and PDU sessions corresponding to slice k,
- Location info for each of these UEs (e.g. center / mid / edge of the cell; GPS coordinates, ..),
- Average of downlink channel quality indicated by UE to gNodeB,
- Fraction of DRBs for each 5QI j for which QoS requirements can't be met,
- Dedicated, prioritized and shared pool of RBs for slice k (rRMPolicyDedicatedRatio, rRMPolicyMinRatio, rRMPolicyMaxRatio)
- Utilized RBs from dedicated, prioritized and shared pool of RBs for slice k,
- RB utilization in the cell (considering all the traffic in that cell)
- Weights used to compute scheduling metric of each logical channel
- Other relevant parameters

RAN
management

203
2B) Slice id k, Resource blocks for this slice :
Dedicated / prioritized / shared RBs,
Number of PDU sessions (or UEs), ..

gNodeB

FIG. 21

FIG. 22

EP 4 510 520 A1

CU (of gNodeB)

Near-RT RIC                                                    E2 Node

RIC SUBSCRIPTION PROCEDURE (RIC Event Trigger, Action=REPORT)

301b   1) RIC SUBSCRIPTION PROCEDURE (RIC Event Trigger, Action=POLICY)

Near-real-time RIC subscribes for following parameters from CU
-   Number of UEs which are supporting PDU sessions corresponding to slice k,    302b
-   rRMPolicyDedicatedRatio, rRMPolicyMinRatio, rRMPolicyMaxRatio for number
    of PDU sessions for slice k
-   Utilization of resources in terms of number of PDU sessions
-   Fraction of DRBs for each 5QI j for which QoS requirements can't be met (in CU
    and over CU-DU midhaul),                                    303b
-   Location info for each UE (corresponding to slice k) obtained via Location
    Service (LCS) Server (e.g. GPS coordinates, ..),
-   Other relevant parameters

2) E2 Node detects
RIC Event Trigger

3) E2 Node modifies
ongoing process
according to policy

304b    4) Associated procedure
        instance continues

RIC INDICATION (Report)
- CU provides values of various parameters subscribed by near-RT-RIC

Near-RT RIC                                          305b    E2 Node

FIG. 23

54

DU             CU    301b             near-RT RIC

RIC subscription procedure (near-RT-RIC, CU)

301a

RIC subscription procedure (near-RT-RIC, DU)

305b

(Report) Various parameters for each slice k from
CU to near-RT-RIC [*E2 RIC Indication (report)*
*enhanced for slicing*]

305a

(Report) Various parameters for each slice k
from DU to near-RT-RIC [*E2 RIC Indication (report)*
*enhanced for slicing*]

307b

E2 Control (*RIC Control Request - enhanced*
*for slicing*): Decision to adapt certain parameters
for select slices such as (rRMPolicyDedicatedRatio,
rRMPolicyMinRatio, rRMPolicyMaxRatio) for
number of PDU sessions corresponding to these
slices,..

306

-Data analysis
-Decision making
to optimize slice
and network
performance

RIC Control Ack

E2 Control (*RIC Control Request – enhanced for slicing*):
Decision to adapt certain parameters for select slices
such as (rRMPolicyDedicatedRatio, rRMPolicyMinRatio,
rRMPolicyMaxRatio) for RBs to be allocated per slot (or
over a time interval), weights used to compute
scheduling metric of each logical channel,..

307a

RIC Control Ack

FIG. 24

401 | I) Slice SLA (e.g. slice throughput, number of PDU sessions etc.)

Slice management,

402 | II) Slice SLA (e.g. slice throughput, number of PDU sessions etc.)

RAN management

404
IV) Slice id k, Dedicated / prioritized / shared RBs, Number of PDU sessions (as per slicing data model),....[E1 interface enhanced for this]

403  III) Slice SLA

CU-CP

407 | (VII) Performance measures from CU-CP to slice analytics at CU-UP. These include communicating performance measures from DU → CU-CP → CU-UP (slice analytics) and CU-CP → CU-UP (slice analytics) [E1 interface enhanced for this]

CU-UP
(Slice Analytics)

405
V) Slice id k, Dedicated / prioritized / shared RBs,....
[F1-C interface enhanced for this]

406 | (VI) Performance measures from DU to slice analytics at CU-UP, routed via CU-CP [F1-C interface enhanced for this]

DU

408
- Data analysis. Decision to change certain slicing related parameters to optimize performance
- If parameters are changed, these are communicated to CU-CP as in Step (IV)) and to DU (via CU-CP) as in Step (V).

FIG. 25

FIG. 26

601 | - Communication of various parameters from DU and CU to slice-analytics
- Slice-analytics analyzes various performance parameters for each slice
- Suitable method (e.g. IIA-1 vs. IIA-2, IIB-1 vs. IIB-2 etc.) chosen for dynamic adaptation of slicing parameters based on operator policies

602 | - Evaluate and decrease rRMPolicyMaxRatio (i.e. shared pool of RBs) for select slices
- Evaluate and increase rRMPolicyMaxRatio (i.e. shared pool of RBs) for select slices

603 | - Evaluate and decrease rRMPolicyMinRatio (i.e. prioritized pool of RBs) for select slices
- Evaluate and increase rRMPolicyMinRatio (i.e. prioritized pool of RBs) for select slices

604 | - Evaluate and decrease rRMPolicyDedicatedRatio (i.e. dedicated pool of RBs) for select slices
- Evaluate and increase rRMPolicyDedicatedRatio (i.e. dedicated pool of RBs) for select slices

FIG. 27

## EUROPEAN SEARCH REPORT

**Application Number**

EP 24 19 5171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/217083 A1 (INTEL CORP [US]) 13 October 2022 (2022-10-13) | 1,3,5, 7-9 | INV. H04L41/0894 |
| Y | * abstract; figures 1-3 * | 2,4,6, 11-13 | H04L41/0896 H04L41/0897 |
| A | * page 1, line 15 - page 2, line 13 * * page 9, line 9 - page 12, line 18 * ----- | 10,14,15 | H04L41/142 H04L41/5019 H04L43/0888 |
| Y | US 2023/139546 A1 (SONG JUNHYUK [KR] ET AL) 4 May 2023 (2023-05-04) | 2,4,6, 11-13 | H04W24/02 |
| A | * abstract; figures 12A-15 * * paragraph [0102] - paragraph [0158] * ----- | 1,3,5, 7-10,14, 15 | ADD. H04L41/5054 |
| A | US 2021/160153 A1 (AKMAN ARDA [TR] ET AL) 27 May 2021 (2021-05-27) * abstract; figures 1-7 * * paragraph [0005] - paragraph [0011] * * paragraph [0025] - paragraph [0075] * ----- | 1-15 | |

**TECHNICAL FIELDS SEARCHED (IPC)**

H04L
H04W

The present search report has been drawn up for all claims

| Place of search | Date of completion of the search | Examiner |
|---|---|---|
| Munich | 5 December 2024 | Plata-Andres, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5171

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| WO 2022217083 | A1 | 13-10-2022 | EP | 4320834 A1 | 14-02-2024 |
| | | | WO | 2022217083 A1 | 13-10-2022 |
| | | | WO | 2022217093 A1 | 13-10-2022 |
| US 2023139546 | A1 | 04-05-2023 | CN | 117957876 A | 30-04-2024 |
| | | | EP | 4344295 A1 | 27-03-2024 |
| | | | KR | 20230030477 A | 06-03-2023 |
| | | | US | 2023139546 A1 | 04-05-2023 |
| | | | WO | 2023027531 A1 | 02-03-2023 |
| US 2021160153 | A1 | 27-05-2021 | CN | 114747249 A | 12-07-2022 |
| | | | EP | 4066532 A1 | 05-10-2022 |
| | | | US | 2021160153 A1 | 27-05-2021 |
| | | | US | 2022278906 A1 | 01-09-2022 |
| | | | WO | 2021108759 A1 | 03-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 23.501 V 18.1.0*, 05 April 2023
- *3GPP TS 28.500 V. 17.0.0*, 31 March 2023
- *3GPP TS 28.541 V 18.4.1*, 30 June 2023
- *3GPP TS 38.300 V 17.4.0*, 28 March 2023